# EUROPEAN PATENT APPLICATION

(11) **EP 3 789 952 A1**
(43) Date of publication of application: **10.03.2021**
(21) Application number: 19841232.2
(22) Date of filing: 19.04.2019
(51) Int. Cl.: G06Q 50/20, G06Q 50/22, G06Q 50/10

(54) **TALENT AND WORK EXPERIENCE-CENTERED CREDIT RECOGNITION ACADEMIC MANAGEMENT SYSTEM AND METHOD, AND SYSTEM FOR PROVIDING TALENT CONTRIBUTION BANK SERVICE USING SAME**

(30) Priority: 27.07.2018 KR 20180087639
(71) Applicant: Ham, Ki Cheol, Chungcheongnam-do 32407 (KR)
(72) Inventor: Ham, Ki Cheol, Chungcheongnam-do 32407 (KR)
(74) Representative: Isarpatent
(86) International application number: PCT/KR2019/004782
(87) International publication number: WO 2020/022611

(57) **Abstract**

An education management system and an education management method that enable credits to be admitted based on at least one of talents and carriers and a talent donation bank service provision system using the same is disclosed. The education management method comprises acquiring information on talent, career or talent career degree and talent donation-related information for talent, career or talent career degree; monitoring the status of talent or career donation of the talent, career or talent career degree based on the talent donation-related information; checking accumulated talent, career or talent career donation score for a degree student during a set period according to the pre-set donation conditions for the degree or the credits after conferring the degree; and canceling the credit or degree, when the donation score of the degree person is less than the reference score within the donation condition, as a result of the check.

## Description

### [Technical Field]

The present invention relates to an education management system and an education management method that enable credits to be admitted based on at least one of talents and carriers and a talent donation bank service provision system using the same.

### [Background Art]

Knowledge possessed by a person is a source of competitiveness in the knowledge-based society. Accordingly, the development and effective utilization of human resources are very important in terms of the competitiveness of countries or companies.

Many companies recently convert their organization systems into the strategy of growth on the basis of human resources, in which knowledge and technologies are accumulated, instead of the strategy of growth on the basis of the input of capital or a labor force which has reached its limit.

However, an education management system currently used in the university or graduate school fails to support the development or effective utilization of human resources for their students. Although some universities promote to develop human resources using an education management method based on on-site and practical education, there is a disadvantage in that the utilization scope of the education management method is limited in terms of the development or utilization of human resources who have talent or careers because an educational system for granting a degree based on various types of talent or careers possessed by students is not taken into consideration.

Meanwhile, there has recently been suggested an educational system for qualifying some talent, careers or talent and careers and obtaining a degree based on such qualified talents, careers or talents and careers. An example of such an educational system has been disclosed in Korean Patent Application Publication No. 10-143536 filed by the applicant of the present invention.

The Korean Patent Application Publication No. 10-143536 discloses an educational management system and educational management method by approving talent and career-based credits, wherein a degree can be obtained by only talent, careers or a talent and career. In the prior art, however, talent, a career or a talent and career is approved as credits and a degree is granted based on the approved talent, career or talent and career, but the prior art is still insufficient in the development or efficient utilization of human resources.

Meanwhile, various online education systems have been recently suggested due to the generation of a case where it is difficult to take an offline course due to geographical and time factors, and the like. This online education system has been specialized based on communication or connection-related technologies accompanied with online education, and in this regard, in order to ensure the evaluation of attendance and absence evaluation or the internal stability of educational courses, methods for surveillance or assessment have been additionally suggested so that attendees can take substantive courses.

As one example, Korean Patent No. 10-0610276 entitled "Internet Lecture System and Lecture Method using the Same" discloses a system that provides an internet lecture through real-time chatting between a lecturer and a student and enables the student to repeatedly attend the lecture to which the student has listened, the system including: a user terminal; a main server configured to convert lecture contents into a video and audio data stream and to store it; a web server configured to transmit the data stream stored in the main server to the user terminal and to provide a memorandum for enabling the student to input the memo through the user terminal; an SMS (Short Message Service) conversion server configured to convert the memo displayed on the memorandum into SMS data; a portable terminal of each of the lecturer and the student who attend the lecture through the user terminal; and a memo transmission server configured to transmit the SMS data converted by the SMS conversion server to at least one portable terminal.

As such, the conventional online educational system is only intended to have similar effects to those of an offline educational system by improving learning efficiency or enabling substantive lessons to be performed, but fails to reflect students' talents or careers.

Furthermore, Korean Patent Laid-Open Publication No. 10-2007-0087839 discloses a system for managing e-classes and a method of evaluating grades, the system including: an input/output means; a recognizing/recognized means; a grade evaluation system; an educational administration system; a lecture contents supporting system; an information analysis system; an on-line interactive system; and an information input and output system. However, the conventional system and method for online educational management are focused on only the aspects of grade evaluation and education management, and do not still reflect student's talents or careers.

As described above, in the conventional education management-related system, since students' talents or careers are not reflected or considered, the system has a limit that it cannot be substantially utilized for effective development or utilization of human resources.

### [Disclosure of Invention]

### [Technical Problem]

An aspect of the present invention is to provide an education management system and an education management method that are useful for development and effective utilization of human resources by enabling a student's talents or careers to be admitted.

A further aspect of the present invention is to provide an education management system that enables students to accumulate knowledge and obtain a degree regardless of a place to study by enabling the students to attend a lecture and to acquire knowledge possessed by university professors at a desired place anywhere and anytime rather than a specific place.

Still another aspect of the present invention is to provide an education management system and method that can be easily and variously approached by the people who do not enter university, need a degree, or would like to acquire a lot of knowledge, can be utilized as a space capable of satisfying the people's various cultural desires, can be a reference library where university or graduate school students can faithfully study, and can perform a role as a platform for initiating others into a person's talents and sharing knowledge.

Still another aspect of the present invention is to provide an education management system and method that enable various functional groups such as associations existing in the society except for career assessment to participate in a teaching area, and enable the organizations of company units to participate in the teaching area and in courses as themselves, thereby allowing to take courses based on links between schools and industry.

Still another aspect of the present invention is to provide a talent donation bank service, which are capable of efficiently utilizing and supporting human resources through the talent donation bank service including a talent, career or talent and career donator pool.

Still another aspect of the present invention is to provide the system and method for providing a talent donation bank service, which are capable of performing online financial support on a customer (a talent, competence or talent and competence donator, etc.) through the talent donation bank service.

Still another aspect of the present invention is to provide an academic management system and method, which monitor the status of talent donation of talent, career, or talented career degree persons or linkage with the talent donation bank service, and based on this, academic management that can limit or cancel the degree of talent, experience or talented experience donor.

Still another aspect of the present invention is to provide an academic management system and method, which records or monitors a recommendation relay between preset people of talent, career or talent career degree, and based on this, the degree of talent, career or talent experience degree You can keep it, limit it, or cancel it.

### [Technical Solution]

To achieve the above objects, an education management method for recognizing talents or careers of students or members as credits in an education management system that is connected to a user terminal, a linked institution, or a talent donation bank service server through a network, the education management method comprises: a step for acquiring information on talent, career or talent career degree and talent donation-related information for talent, career or talent career degree; a step for monitoring the status of talent or career donation of the talent, career or talent career degree based on the talent donation-related information; a step for checking accumulated talent, career or talent career donation score for a degree student during a set period according to the pre-set donation conditions for the degree or the credits, regarding the degree of the talent, career, or talent experience degree or the credits of the talent, career, or talent experience subject required for the degree, after conferring the degree; and a step for canceling the credit or degree, when the donation score of the degree person is less than the reference score within the donation condition, as a result of the check.

In an embodiment, the education management method further comprises a step for delivering a guide or notification for cancellation of the credit or degree before the step of canceling.

Wherein the credits or degrees include credits or degrees awarded to the degree in accordance with a recommendation signal or consent signal obtained from member terminals of three or more talent, career, or talent career degree students.

Furthermore, wherein the credits or degrees include the talents, careers or talents of a person who has worked for a predetermined period of time or longer in a designated institution, business, company, educational institution, or affiliated institution, or credits or degrees awarded to the applicant upon application for a degree.

To achieve the above objects, an education management system which is connected to a user terminal via a network and which enables careers and talents to be admitted as the credits, the system comprising: a first receiving unit configured to receive a student's talent-related data from the user terminal, the user terminal provided with a first user interface for inputting the talent-related data; a second receiving unit configured to receive a student's career matter data from the user terminal, the user terminal provided with a second user interface for inputting the career matter data; an associated authority linkage unit configured to inquire to an associated authority as to whether or not talent matters included in the talent-related data are true and to receive a reply as to whether or not the talent matters are true from the associated authority; a certificate authority linkage unit configured to inquire to a relevant certificate authority as to whether or not the career matters included in the career data are true and to receive a reply as to whether or not the career matter are true from the relevant certificate authority; a talent assessment unit configured to assess talent matters on the basis of predetermined first standards that includes the criteria for grating credits for talent donation time registered at the affiliated institution; a career assessment unit configured to assess career matters in the career matter data on the basis of predetermined second standards that the criteria for granting credits for working hours greater than or equal to a certain standard for major-related work at a business included in the above-mentioned career matters or hours for completing education more than a certain standard at a predetermined educational institution; a credit-awarding unit configured to give credits corresponding to grades resulting from talent assessment for a student's major to the talent matters when the talent matters are admitted or configured to give credits corresponding to grades resulting from career assessment for the student's major to the career matters when the career matters are admitted; a web server configured to include the first receiving unit and the second receiving unit; a classification server configured to include the web server, a talent classification server, a related organization classification server, a company classification server and a student classification server which are connected to the web server; a management server configured to include the associated authority linkage unit, the certificate authority linkage unit and the credit-awarding unit; and an evaluation server configured to include the career assessment unit, the credit-awarding unit, a credit cancellation unit and a degree cancellation unit, wherein the credit cancellation unit and the degree cancellation unit cancel the credits or degrees for a talent recognition degree, a career recognition degree, or a talent career recognition degree of a user corresponding to the user terminal based on information related to talent donation obtained from the affiliated institution or the talent donation bank service system corresponding to the affiliated institution.

Here, when the user terminal of a specific expert accesses the web server, the talent classification server classifies talents for the expert and selects a lecture type. The associated authority classification server classifies associated authorities including online universities and sets a lecture type. The company classification server classifies functional education or research activities performed by the company in connection with the online university. The student classification server classifies the student as a student with experience or a student without experience based on the information included in the career data, categorizes the student with the experience into a student with another school experience, a student with a preset industry experience, or a student with a preset experience other than the industry, and stores it in the database. If there is a career of the industry, the student classification server recognizes the career type, assigns weights according to the career type to convert it into corresponding credits, and stores the converted data in a database.

In addition, the ratio of talent recognition credits, career recognition credits, or talent career recognition credits that must be acquired through at least one of the talent and the career is from 60% or more to 100% or less based on the standard credits for graduation or degree acquisition. When the credits required by at least one of the talents and the careers are 60% or more of the standard credits or graduation credits, the credits awarding unit records that the degree is acquired by talent recognition credits, career recognition credits, or talent career recognition credits in the database of the student.

In an embodiment, the education management system further comprises a recommended relay management unit managed by the management server, wherein the recommendation relay management unit accesses a recommendation relay record database (DB) related to talent donation, obtains recommended information and recommendation information of corresponding degrees from the record DB, and gives a talent donation score according to the recommended information and the recommendation information.

To achieve the above objects, a system for providing a talent donation bank service according to further another aspect of the present invention is a system for providing a talent donation bank service, including at least one user terminal and a talent donation bank service server connected to the user terminal over a network. The talent donation bank service server includes a transmission and reception unit which receives the fund investment request of a customer from the user terminal; an authentication unit which has the talent qualification degree, competence qualification degree or talent and competence qualification degree of the customer authenticated by a corresponding school server; a value evaluation unit which evaluates the talent qualification degree, the competence qualification degree or the talent and competence qualification degree authenticated through the authentication unit as a property value based on a predetermined criterion; and an investment unit which transmits investment funds to the customer based on the evaluation results of the value evaluation unit. Wherein the value evaluation unit calculates the talent recognition degree, career recognition degree, or talent career recognition degree based on a preset one-time or one-day lecture fee as the first criterion; the daily average value of lecture opening time for a preset related subject for a recent certain period as a second criterion; or the evaluation result is calculated by combining the first criterion and the second criterion.

### [Advantageous Effects]

In accordance with the above mentioned present invention, there may be provided the education management system and method and a talent donation bank service provision system that is useful for development and effective utilization of human resources by enabling a student's talents or careers to be admitted.

Further, there may be provided the education management system that enables students to accumulate knowledge and obtain a degree regardless of a place to study by enabling the students to attend a lecture and to acquire knowledge possessed by university professors at a desired place anywhere and anytime rather than a specific place. In other words, there may be provided the education management system and method that enable careers except for school classes to be incorporated into a system for the completion of online education and to be linked with credits required for the obtaining of a degree by evaluating the careers pursuant to predetermined rules and authenticating the careers, which was not attempted in a conventional online or offline education system and method.

Furthermore, according to the present invention, there can be provided an education management system and method that can be easily and variously approached by the people who do not enter university, need a degree, or would like to acquire a lot of knowledge, can be utilized as a space capable of satisfying the people's various cultural desires, can be a reference library where university or graduate school students can faithfully study, and can perform a role as a platform for initiating others into a person's talents and sharing knowledge.

In addition, according to still another embodiment of the present invention, there may be provided the education management system and method that enable various functional groups, such as associations existing in the society except for career assessment to participate in a teaching area, and enable the organizations of company units to participate in the teaching area and in courses as themselves, thereby allowing to take courses based on links between schools and industry. Further, according to still another embodiment of the present invention, there may be provided the education management system and an education management method that enable credits to be admitted on the basis of talents and careers in an alternative university form.

According to the present invention, there can be provided the system and method for providing a talent donation bank service, which are capable of efficiently utilizing and supporting human resources through the talent donation bank service including a talent, career or talent and career donator pool. That is, there can be provided the system and method for providing a talent donation bank service, which are capable of obtaining user information for a customer (a talent, competence or talent and competence donator, etc.) and efficiently utilizing human resources online using the user information in association with the educational system that grants a talent, competence or talent and competence qualification degree.

Furthermore, according to the present invention, there can be provided the system and method for providing a talent donation bank service, which are capable of performing online financial support on a customer (a talent, competence or talent and competence donator, etc.) through the talent donation bank service. That is, there can be provided the system and method for providing a talent donation bank service, wherein a fund investment request related to financial support, etc. is received from a customer, a lendable investment fund amount is calculated through the evaluation of a value for the customer's talent, career or talent and career and the calculated investment funds are transmitted to the customer or an investment fund guidance for the customer is performed, and convenient financial transactions of the investment funds for the customer can be supported in association with a bank server.

Further, according to the present invention, talented career credits are recognized by monitoring the status of talent donation of talents, careers, or talents with a talented background or linkage with talent donation banking services, and limiting or canceling degrees of talents, careers, or talented careers, and therefore, it has the advantage of being able to perform more reliable and strict academic management.

Furthermore, according to the present invention, the recommendation relay records or monitors the recommendation relay between talent, career, or talent background degree and preset people, and limits or cancels the degree of a talent, career or talent background degree based on this, and therefore, academic management for credit recognition has the advantage of being more scalable, reliable and rigorous.

### [Description of Drawings]

FIG. 1 is a block diagram showing an education management system for enabling credits to be admitted based on talents and careers (hereinafter briefly referred to as "the education management system") according to one embodiment of the present invention;
FIG. 2 is a flow chart showing an education management method for enabling credits to be admitted based on talents and careers (hereinafter briefly referred to as "the education management method"), which can be applied to the education management system of FIG. 1;
FIG. 3 is a block diagram showing one example of an integrated education management system to which the education management system of FIG. 1 is applied;
FIG. 4 is a flow chart showing one example of an education management method which can be applied to the integrated education management system of FIG. 3;
FIG. 5 is a block diagram showing an education management system according to another embodiment of the present invention;
FIG. 6A and FIG. 6B are flow charts for an education management method which can be applied to the education management system of FIG. 5;
FIG. 7 is a block diagram showing an integrated education management system to which the education management system of FIG. 5 is applied;
FIG. 8 is a flow chart for the operation procedure of a talent classification server of FIG. 7;
FIG. 9 is a flow chart for the operation procedure of an associated authority classification server of FIG. 7;
FIG. 10 is a flow chart for the operation procedure of a company classification server of FIG. 7;
FIG. 11 is a flow chart for the operation procedure of a student classification server of FIG. 7; and
FIG. 12 is a flow chart for the operation procedure of an evaluation server of FIG. 7.
FIG. 13 shows a general configuration of a system for providing a talent donation bank service in accordance with an embodiment of the present invention.
FIG. 14 shows a schematic configuration of the talent donation bank service server of the system of FIG. 13.
FIG. 15 is a flowchart of a method for providing a talent donation bank service in accordance with an embodiment of the present invention.
FIG. 16 is a flowchart of a method for providing a talent donation bank service in accordance with another embodiment of the present invention.
FIG. 17 is a flowchart of a method for providing a talent donation bank service in accordance with yet another embodiment of the present invention.
FIG. 18 is a flowchart of a method for providing a talent donation bank service in accordance with yet another embodiment of the present invention.
FIG. 19 is a flowchart of an education management method in accordance with yet another embodiment of the present invention.
FIG. 20 is a diagram of a main configuration of an education management system implementing the academic management method of FIG. 19.
FIG. 21 is a flowchart of a main configuration of an education management method in accordance with yet another embodiment of the present invention.

### [Mode for Invention]

Hereinafter, preferred embodiments of the present invention are described in detail with reference to the accompanying drawings so that a person having ordinary skill in the art to which the present invention pertains may easily practice the embodiments

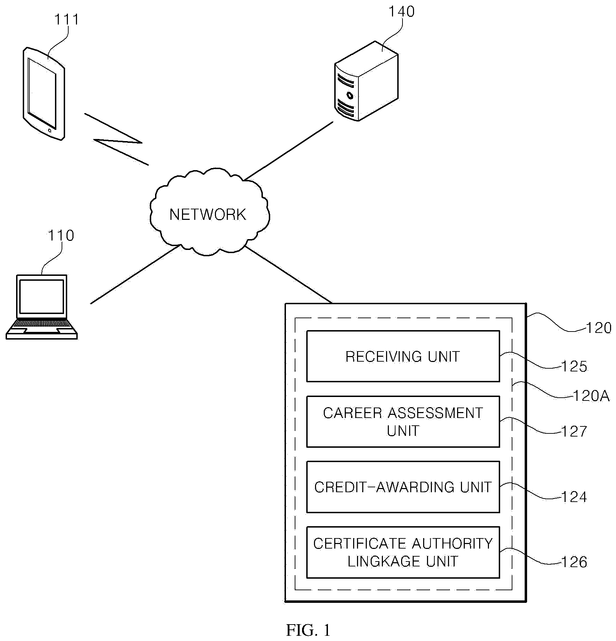

FIG. 1 is a block diagram showing an education management system for enabling credits to be admitted based on talents and careers according to one embodiment of the present invention.

Referring to FIG. 1, an education management system for enabling credits to be admitted based on talents and careers 120 according to the present embodiment (hereinafter briefly referred to as "the education management system") is mounted to a school server 100 or is connected to user terminals 110, 111 and an authentication server 140 via a network as an education management server linked with the school server 100, thereby enabling careers to be admitted as credits. To do so, the education management system 120 includes: a receiving unit 125 configured to receive a student's career data from the user terminals 110, 111; a career assessment unit 127 configured to assess career matters included in the career data based on predetermined standards; and a credit-awarding unit 124 configured to give credits corresponding to grades resulting from the carrier assessment for the student's major to the career matters when the career matters are acceptable.

Also, the education management system 120 may further include a certificate authority linkage unit 126 configured to inquire to a relevant certificate authority as to whether or not the career matters included in the career data are true and to receive a reply as to whether or not the career matters are true from the relevant certificate authority.

The receiving unit 125 is a means configured to receive the student' career data from the user terminals 110, 111 through the network or a constitution unit for performing a function corresponding to the means. The receiving unit 125 may include a communication module of a predetermined communication method, and may provide a user interface for inputting the career data into the user terminals 110, 111.

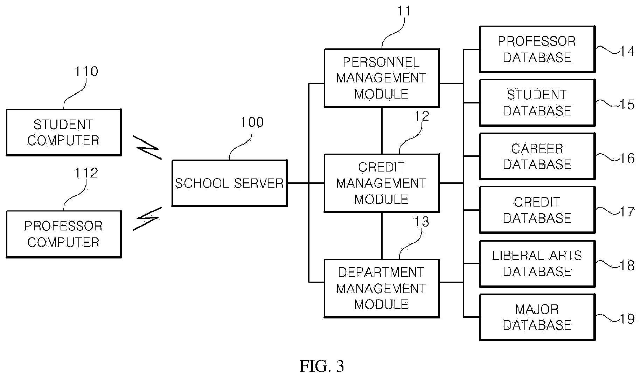

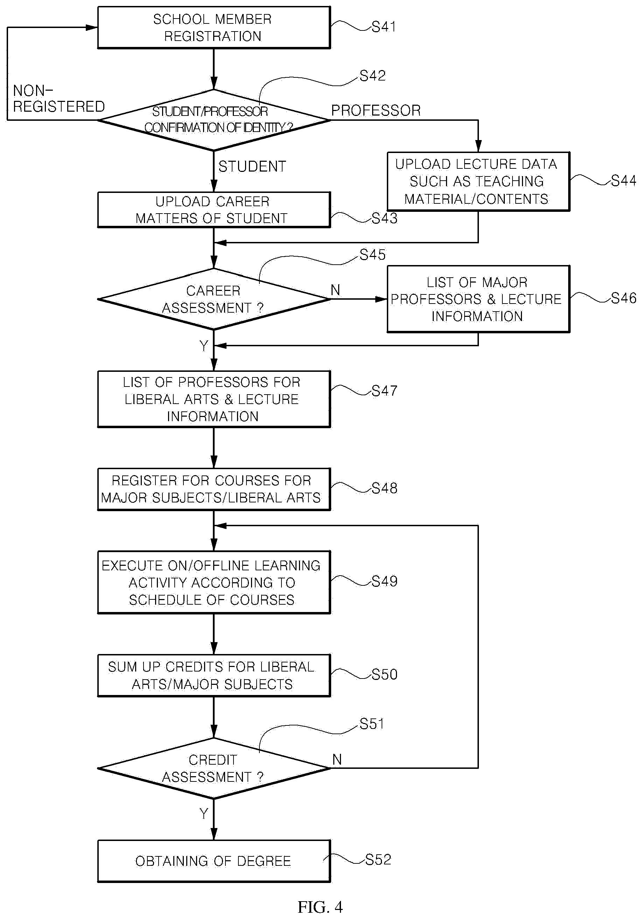

The career assessment unit 127 may assess the student's career matters confirmed through the certificate authority 140 according to pre-stored standards (standards for evaluation) in a storage unit or a data base. The career assessment unit 127 will be more specifically described in the sections for the procedures of career assessment of FIGS. 3 and 4.

The credit-awarding unit 124 may give predetermined credits for working hours included in the career matters being beyond a constant standard regarding major-related businesses and carried out at a company or for the completion hours of education being beyond a constant standard and carried out in a predetermined educational institution.

The credit-awarding unit 124 may be implemented of a means for providing credits for the student's major using a method of updating the student's education record information stored in a storage unit or a data base, or a constitution unit for performing a function corresponding to the means. Also, the credit-awarding unit 124 may be implemented of some functional units in an education management module (see reference numeral 12 of FIG. 3) of the education management system 120 or a constitution unit for substantially performing the same function as that of the functions units.

The certificate authority linkage unit 126 may be connected to the certificate authority 140 through the network, and may be implemented of a means for inquiring to the certificate authority 140 as to whether or not the career matters are true and for receiving a reply thereto, or a constitution part for performing a function corresponding to the means. The certificate authority 140 may include a server of the Automobile Technical Association, a server of the Hairdressers Association and the like.

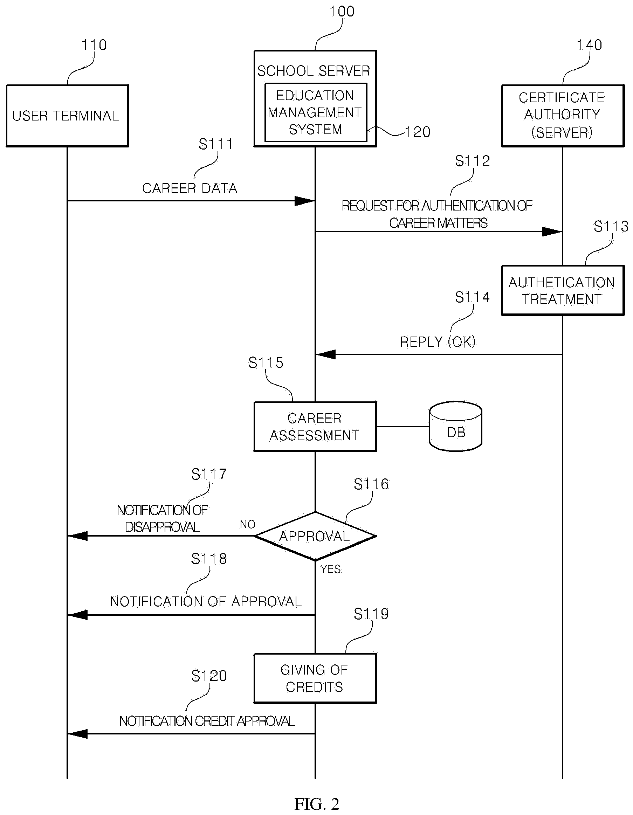

FIG. 2 is a flow chart showing an education management method for enabling credits to be admitted based on talents and careers (hereinafter briefly referred to as "the education management method") which can be applied to the education management system of FIG. 1.

Referring to FIG. 2, the education management method according to the present embodiment may be performed such that careers are admitted as credits through the education management system installed at or linked with the school server 100 or connected to the user terminal through a network.

More specifically, the education management system 120 first receives a student's career data from the user terminal 110 or 111 Sill.

Next, the education management system 120 may assess career matters included in the career data on the basis of predetermined standards S 115.

Meanwhile, before assessing the career matters S115, the education management system 120 may further include inquiring to the certificate authority 140 as to whether or not the career matters included in the career data are true S112, handling authentication of the certificate authority 140 S 113 and receiving a reply from the certificate authority 140 as to whether or not the career matters are true S114.

As a result of assessing the career matters S116, when the career matters are not admitted, the education management system 120 may transmit a notification on disapproval of the career matters as credits to the user terminal 110 S 117. Meanwhile, when the career matters are admitted, the education management system 120 may transmit a notification on approval of the career matters as credits to the user terminal 110 S118.

Next, the education management system 120 may give credits corresponding to grades resulting from the career assessment for the student's major to the career matters S119. Then, the education management system 120 may notify a result of recognition of the career matters as credits or a result of the given credits to the user terminal 110 S120.

FIG. 3 is a block diagram showing one example of an integrated education management system to which the education management system of FIG. 1 is applied.

Referring to FIG. 3, an integrated education management system according to the present embodiment is configured such that the school server 100 is connected to a school computer 110, and a professor computer 112 through a network. The school server 100 includes a personal management module 15a, a credit management module 15b and a department management module 15c.

The personal management module 15a may include a student database 15e and a professor database 15d, the credit management module 15b may include a career database 15f and a credit database 15g, and the department management module 15c may include a liberal arts database 15h and a major database 15i. Here, the modules and the databases may be connected to each other.

The school server 100 may connect the professor computer 112 of faculty members and the school computer 110 of students through a network, may provide a web site of the school server, may confirm and authenticate the identity of teaching staffs and students by receiving the request of authorization provided from the professor computer 112 or the student computer 110 connected to the school server 100 through the personal management module 15a, and provide lecture data including teaching materials and multimedia video contents through the education management module 15c. Also, and the school server 100 may manage records as to whether or not students take the online and offline lectures of established departments and established lectures, enable the student's career matters to be admitted as major credits through the credit management module 15b, and give or manage liberal art credits and major credits necessary for obtaining a degree.

Explaining more specifically it, the personal management module 15a may authenticate the identity of the teaching staffs through the professor database 15d, may store confirmation records of the identity and a list of the teaching staffs in the professor database 15d, complete the students' course registration through the student database 15e, perform confirmation of the identity, and store the confirmation records of the identity and a list of the students in the student database 15e.

The department management module 15c may provide lecture data including teaching materials and multimedia video contents to the students through the liberal arts database 15h and the major database 15i, and also may store the lecture data including teaching materials and multimedia video contents provided by professors in the liberal art database 15h and the major database 15i.

The credit management module 15b may convert the student's career matters into major credits through the career data base 15f, give grades immediately for the students' academic performances through the credit database 15g, collect all grade statistics, and store academic performance grades in a current level in the credit database 15g.

The student's career matters may be admitted as major credits when the career matters meet the standards for career assessment. That is, predetermined jobs among career matters relating to a business license, a duty paid certificate, a withholding receipt, a certificate of working experience, a copy of a certificate of competency, competition awards, a certificate of the working experience of a group and an association and the like or predetermined working hours performed in a company are admitted as credits for specific liberal arts or major credits of a relevant department.

For example, in the case of the department of car maintenance, 40 hours related to car maintenance careers are admitted as 1 credit, and when 25 or more credits are obtained, it is admitted to complete the first form. The career matters of predetermined procedures such as separation and attachment and basic trouble diagnosis, the understanding of an engine and system and trouble diagnosis thereof, the understanding and full knowledge of control devices for each system, single diagnosis according to a trouble phenomenon, repair and diagnosis for a difficult trouble, the full knowledge of customer service procedures and leading procedures and the like among maintenance procedures may be converted into credits.

Also, in the case of a beauty care related department, 40 hours of beauty care related careers are admitted as 1 credit, and when 25 or more credits are obtained, it is admitted to complete the first form. The career matters of predetermined procedures such as the procedure of customer services (arrangement of information on customers, measurement for scalp and hair), the procedure of professionalism (scaling, hygienic conditions, dress, a skill level, and a posture), the procedure of systematization (flexibility, connectivity, consideration, dry, nutrition supply, and treatment), the procedure of a master (the handling of customer reception, the master of scaling, massages, and skilled handling) may be converted into credits.

Also, in the case of a noncommissioned officer department, soldier careers are admitted as credits, and 40 hours of the solder careers are admitted as 1 credit, so, when 25 or more credits are obtained, it is admitted to complete the first form. Also, as the solider careers are admitted as credits for a major field, when the solider careers are related to transportation, the solider careers may be admitted as credits for the major field of the department of car maintenance, and when the solider careers are related to communication, the solider careers may be admitted as credits for the major field of the department of electricity or electronics.

As such, the major credits are obtained based on careers, and insufficient major credits and liberal art credits are supplemented by completing courses for a major and liberal arts which are established in the school server 100, so when the acquiring of major credits and credits for liberal arts necessary for obtaining a degree is completed, the school server 100 enables the student to obtain a degree of the relevant department.

That is, in the education management system according to the present embodiment, among credits for graduation (for example, 140 credits), when a student who has obtained credits being beyond constant credits and based on credits obtained by the recognition of his or her careers, a degree granted for the student may be recorded in a form such as 'a bachelor of electronic engineering (the recognition of careers),' 'a bachelor of electronic engineering resulting from the recognition of careers,' 'a master of electronic engineering resulting from the recognition of careers,' 'a master of electronic engineering (the design of a semiconductor) (the recognition of careers)' and the like.

FIG. 4 is a flow chart showing one example of an education management method which can be applied to the integrated education management system of FIG. 3.

Referring to FIG. 4, the education management method according to the present embodiment may include: a student or a professor connecting to the school server 100 through the school computer 110 or the professor computer 112 for performing the registration as a school member S41; confirming an identity of the student or the professor S42; uploading career data when a connector is the student S43; uploading lecture data including teaching materials and multimedia video contents when a connector is the professor S44; assessing the career matters on the basis of the student's career data S45; providing the list of teaching staffs for major subjects and lecture information when major credits are less than a predetermined level S46; providing the list of teaching staffs for liberal arts and lecture information when major credits are more than a predetermined level S47; the student registering courses for liberal arts or major subjects S48; carrying out online and offline learning activities according to the schedule of the courses or evaluating learning grades S49; totaling up credits for the liberal arts and credits for the major subjects S50; evaluating the credits (the assessment of credits) as to whether or not the credits are more than predetermined credits S51; granting a degree when the credits are more than the predetermined credits, thereby enabling the student to obtain the degree S52.

The education management method according to the present embodiment will be hereinafter described in more detail.

First, when a student or a professor connects to the school server 100 through a network of the school computer 110 or the professor computer and performs the registration of a school member by uploading personal data for the confirmation of his or her identity, the integrated education management system or the education management system 120 stores the personal data for the confirmation of the identity of the student or the professor in the school database 15 and the professor database 14, and authenticates the registration of the school member of the student or the professor S41.

Next, when the student or the professor connects to the school server 100 through the school computer 110 or the professor computer 112 and logs on thereto, the education management system 120 performs the confirmation of his or her identity using data of the school database 15 or the professor database 14 through the personal management module 11. When the student or the professor is not a school member, the education management system 120 moves on to the step of registering as the school member S41, and when the student or the professor is a school member, the education management system 120 moves on to the next step S42.

In step S42 above, when a registered member is the student, the education management system 120 requests the student's career data. When the career data requested by the education management system 120 is uploaded from the student computer 110, the education management system 120 stores the student's career data in the career database 16 S43.

Here, the career data requested by the education management system 120 refers to information or electronic documents capable of certifying careers such as a business license, a duty paid certificate, a withholding receipt, a certificate of working experience, a copy of a certificate of competency, competition awards, and a certificate of the working experience of a relevant group and association.

In step S42 above, when a registered member is the professor, the education management system 120 is liked with the school server 100 to request to the professor to provide lecture data including teaching materials and multimedia video contents. When the lecture data requested by the education management system 120 is uploaded from the professor computer 112, the education management system 120 stores the professor's lecture data including teaching materials and multimedia video contents in the liberal art database 18 and the major database 19 S44.

Next, the education management system 120 performs the assessment of careers based on the student's career data stored in the career database 16 through the credit management module 12 to enable the student's career matters to be admitted as major credits, stores the major credits in the credit database 17, and moves to each next step S45.

Here, the assessment of careers in step S45 above may be intended to admit the student's career matter as predetermined credits, and may be carried out in such a manner that the career matters are admitted as credits according to predetermined standards or standards for recognition of the certificate authority.

In step S45 above, even after the career matters have been admitted as credits, when the major credits are less than a level, the education management system 120 extracts data of the professor database 14 and the major database 19 through the education management module 13 and provides the list of teaching staffs for major subjects and lecture information to the student computer 110 so as to proceed with next steps S46.

Also, in step S45 above, after the career matters have been admitted as credits, when major credits are more than a level, the education management system 120 extracts data of the professor database 14 and the liberal art database 18 through the education management module 13 and provides the list of teaching staffs for liberal arts and lecture information to the student computer 110 S47.

At this time, the student can register for courses regarding liberal arts and major subjects necessary for the student after reviewing the list of teaching staffs for liberal arts and major subjects and lecture information provided from the school server 100 to the school computer 110. Upon the registration for the courses, the school server 100 stores the details of the registration for the courses in the credit database 17 through the credit management module 12 S48.

The student connects to the school server 100 through the school computer 110 and learns on/offline from lecture data including teaching materials and multimedia video contents provided through the liberal art database 18 or the major database 19 according to the schedule of the courses using the major management module 13 by the school server 100 so as to perform learning activity or so as to be evaluated on learning grades. At this time, the school server 100 stores the student's attendance matter and learning grade in the credit management database 17 through the credit management module 12 S49.

Furthermore, the school server 100 stores the sum of credits of liberal arts and major subjects in the credit management database 17 through the credit management module 12 S50.

The school server 100 judges whether or not credits are more than the standard credits by performing credit assessment based on the data of the credit database 17 through the credit management module 12. As the result of judgment, when the credits are less than the standard credits, the school server 100 proceeds with step S49 above again, and when the credits are more than the standard credits, the school server 100 proceeds with a next step S51. That is, when the completed credits are more than the standard credits, a degree is granted so that the attendee can obtain the degree S52.

As such, the education management method according to the present embodiment may enable careers to be admitted as credits, provide interactional real-time learning and school affair management using a lot of information on a network having time saving, and without constraints of time and space, enable students to select desired lecture contents anytime and anywhere and desired professors who give lectures, allow convenience which enables students to request their learning grades immediately, and enable the students to acquire their degrees by completing credits required for the degrees through their careers.

Meanwhile, according to one embodiment of the present invention, the education management system enables the grades of predetermined games for which a player wins an award in a local contest, a national contest, an international contest and the like to be admitted as careers or talents. In this case, scoring of the winning records is performed according to predetermined standards, and when the winning records are more than predetermined grades, the winning records may be admitted as major credits corresponding to the predetermined games.

Also, the education management system according to the present embodiment may be implemented such that a social contribution ratio for predetermined items such as a volunteer activity and the like is admitted as careers or talents. In such a case, the social contribution ratio may be admitted as major credits corresponding to a predetermined department or a major subject.

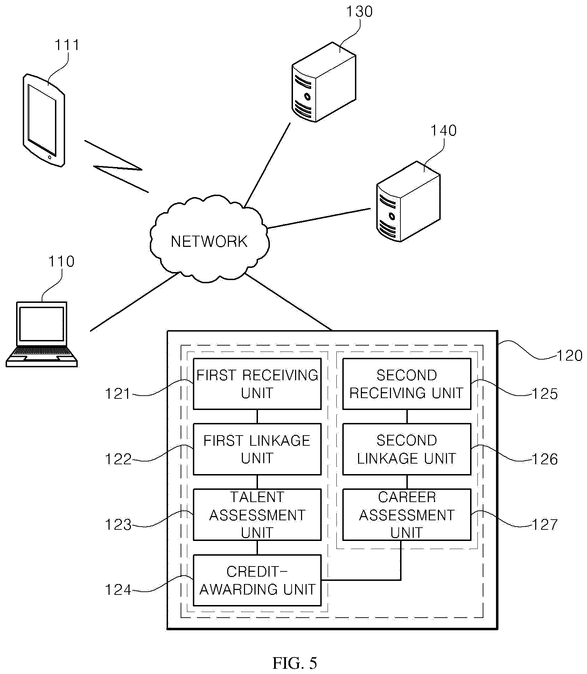

FIG. 5 is a block diagram showing an education management system according to another embodiment of the present invention;

Referring to FIG. 5, the education management system 120 according to the present embodiment for enabling credits to be admitted based on talents and careers which is connected to a user terminal, the associated authority (server) and the certificate authority (server) via a network to enable the careers and talents to be admitted as the credits, the system including: a first receiving unit configured to receive a student's talent-related data from the user terminals 110, 111; a relevant authority linkage unit 122 configured to inquire to a relevant authority 130 as to whether or not the talent matters included in the talent data are true and to receive a reply as to whether or not the talent matters are true from the relevant authority 130; and a talent assessment unit 123 configured to evaluate talents on the basis of a predetermined standard; a credit-awarding unit 124 configured to give credits corresponding to a score resulting the assessment of talent matters regarding his or her major when talent matters are admitted.

Also, the education management system 120 may further include: a second receiving unit 125 configured to receive the student's career data from the user terminals 110, 111; the career assessment unit 127 configured to evaluate career matters in the career data on the basis of the predetermined standards. Here, the credit-awarding unit 124 gives credits corresponding to a score resulting from the assessment of the career matters regarding the student's major when the career matters are admitted.

Also, the education management system 120 may further include a certificate authority linkage unit 126 configured to inquire to a certificate authority 140 as to whether or not the career matters included in the career data are true and to receive a reply as to whether or not the career matter are true from the certificate authority 140.

The aforesaid network includes a wire communication network, a wireless communication network or an integrated network thereof. The wireless communication network may include a local area network or a broadband communication network (3G, WiMAX, WiBro, LTE, LTE-A, a satellite network and the like).

The user terminal 110 is a computer terminal that is connected to the education management system 120 through the network so as to transmit and receive data with the education management system, and may include a smart phone 111 or i-pad such as an i-phone, a Galaxy note and the like, a smart pad such as a Galaxy tap and the like, a computer device such as a note book, a desktop computer and the like. Also, the user terminal may include a client terminal which is connected to a Claude server on the network so as to access a program and data of the server. As such, the user terminal may be implemented of a terminal which is accessible to a server device in various forms and using various communication methods (wire communication, wireless communication or a combination thereof).

Describing each constituent element of the aforesaid education management system more specifically, the first receiving unit 121 is a means for receiving the student' talent-related data from the user terminal 110 through the network and is a constitution unit for performing a function corresponding to the means. The first receiving unit 121 may include a communication module of a predetermined communication method and may provide a first user interface for inputting the talent-related data to the user terminal 110. Here, the talent-related data includes talent matters corresponding to predetermined talent donation items in the associated authority.

The second receiving unit 125 is a means for receiving the student's career data from the user terminal 110 through the network or a constitution unit for performing the function corresponding to the means. The second receiving unit 125 may include a second communication module of a predetermined communication method, and may provide a second user interface for inputting career data to the user terminal 110. Here, the career data includes career matters corresponding to predetermined careers or predetermined completion items of education in the certificate authority 140.

The associated authority linkage unit 122 is connected to the associated authority 130 through a network, is a means for inquiring to the associated authority as to whether or not the student's talent matters are true and receiving a reply as to whether or not the student's talent matters are true, and is implemented of a constitution unit for performing the function corresponding to the means. The associated authority 130 may include a mentoring management server and a talent donation foundation, a class management server after school, and the like.

The certificate authority linkage unit 126 is connected to the certificate authority 140 through a network, is a means is a means for inquiring to the certificate authority as to whether or not the student's career matters are true and receiving a reply thereto, and is implemented of a constitution unit for performing the function corresponding to the means. The certificate authority 140 may include a server of the Automobile Technical Association, a server of the Hairdressers Association and the like.

Hereinafter, the associated authority linkage unit 122 will be briefly referred to as "a first linkage unit" and the certificate authority 126 will be briefly referred to as a second linkage unit.

The talent assessment unit 123 evaluates the student's talent matters confirmed through the associated authority 130 according to the pre-stored standards (a first standard) in a storage device or a database.

The career assessment unit 127 evaluates the student's career matters confirmed through the certificate authority 140 according to the pre-stored standards (a second standard) in a storage device or a database.

The credit-awarding unit 124 gives predetermined credits with regard to talent donation hours registered in the associated authority, and also provides predetermined credits with regard to working hours being beyond a predetermined standard for major-related businesses included in career matters and performed at a company or education completion hours being beyond a predetermined standard performed at a pre-designated education institution. The credit-awarding unit 124 may be implemented of a means for providing credits to the student's major in a method of updating the student's education recording information or a constitution unit for performing a function corresponding to the means. Also, the credit-awarding unit 124 may include some function units or constitution units in the education management server 73 of the management server.

The first receiving unit 121, the first linkage unit 122, the talent assessment unit 123 and the credit providing unit 124 correspond to a credit management unit for enabling the credits to be admitted on the basis of the talents. Furthermore, the second receiving unit 125, the second linkage unit 126, the career assessment unit 127 and the credit-awarding unit 124 correspond to an education management unit for enabling the credits to be admitted on the basis of the careers.

According to the present embodiment, there may be provided the education management system which enables credits to be admitted based on talents or careers, or which recognizes talents and careers-centered credits in an alternative university form or an alternative graduate school form which could not be found in the conventional education management system or an education management method capable of implementing a similar system to the conventional education management system.

For example, the education management system according to the present embodiment may be differentiated from the existing education management system by setting a rate of talent/career-based credits which should be necessarily obtained with regard to credits for graduation (for example, 140 credits) required at a major department of an university or a graduate school, or grades for the acquiring of a degree as more than about 60%. In such a case, remaining credits may be provided by credits resulting from taking courses for liberal arts, internet courses, minimum attendance classes, and drawing up articles and the like. One example of a rule for the acquisition of credits regarding the aforesaid education management system according to the present embodiment is shown in the following Table 1.

**[Table 1]**

| Department | Rate of the minimum number of credits by items which should be acquired with regard to the number of credits for graduation (140 credits) | | | | |
|---|---|---|---|---|---|
| A | 60% | 0∼10% | 0∼10% | 0∼10% | 20% |
| B | 70% | 0∼10% | 0∼10% | 0∼10% | 15% |
| c | 80% | 0∼5% | 0∼5% | 0∼5% | 10% |
| D | 85% | 0∼5% | 0∼5% | 0∼5% | 10% |
| E | 75% | 0∼5% | 0∼5% | 0∼5% | 15% |

In Table 1, when talents and careers are admitted, the education management system may be implemented such that a condition for the granting of a degree is set as a case in which all the credits resulting from the recognition of talents and careers are at least more than 30% of the credits for graduation. Also, the education management system may record in a relevant student's database a degree authenticated with regard to only an item (talent or career) in which more credits are obtained when credits resulting from talent or career authentication are beyond a level of the minimum number of credits which are necessarily completed, and one kind of credits of the credits resulting from talent or career authentication is less than 30% of the number of credits for graduation.

In the education management system according to the present embodiment, among credits for graduation (for example, 140 credits), when a student who has obtained credits being beyond constant credits and based on credits obtained by the recognition of his or her talents or careers, a degree granted for the student may be recorded in a form such as 'a bachelor of electronic engineering (the recognition of careers),' 'a bachelor of electronic engineering resulting from the recognition of careers,' 'a master of electronic engineering resulting from the recognition of careers,' 'a master of electronic engineering (the design of a semiconductor) (the recognition of careers)' and the like.

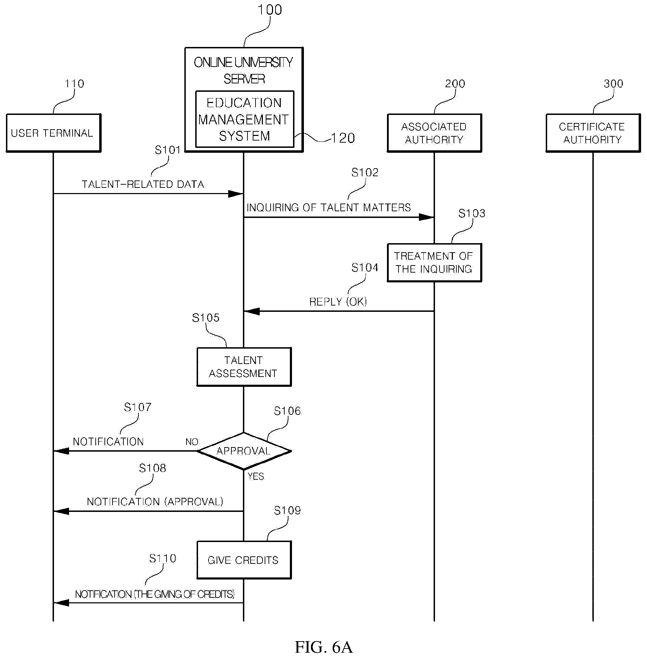

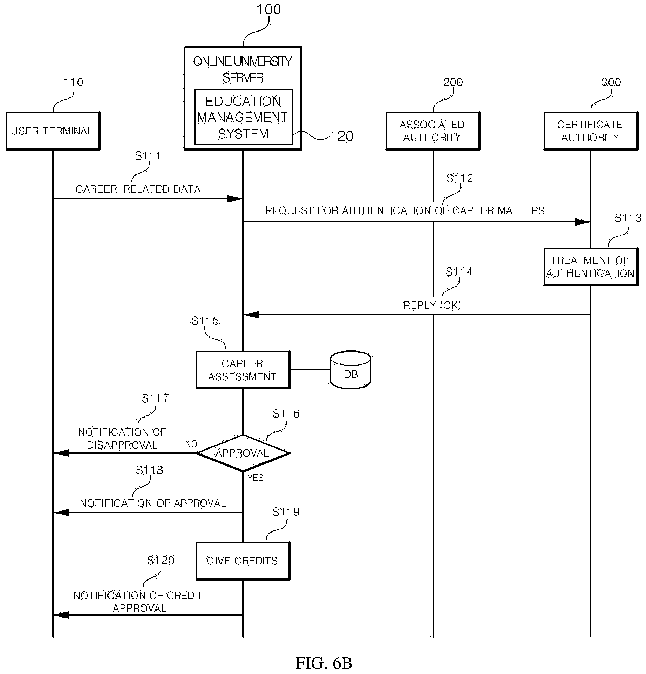

FIG. 6A and FIG. 6B are flow charts showing an education management method which can be applied to the education management system of FIG. 5.

Referring to FIG. 6A, in the education management method according to the present embodiment, first, the education management system 120 in the online university or graduate school or offline university or graduate school server 100 receives the student's talent-related data from the user terminal 110 S101.

Next, the education management system 120 inquires to the associated authority 130 as to whether or not the talent matters included in the talent-related data are true S102. Furthermore, after inquiring it to the associated authority 130 S103, the education management system 120 receives from the associated authority 130 a reply as to whether or not the talent matters are true S104.

Next, the education management system 120 evaluates the talent matters on the basis of the predetermined standards S 105. After the assessing of the talent matters (S106), when the talent matters are not admitted, the education management system 120 transmits a notification about disapproval of the talent matters to the user terminal 110 S107. Meanwhile, when the talent matters are admitted, the education management system transmits a notification about approval of the talent matters to the user terminal 110 S108.

Next, the education management system 120 gives credits corresponding to a score resulting from the assessment of the talent matters for the student's major S 109. Furthermore, the education management system 120 transmits a notification signal about the credits to the user terminal 110 through a short message service (SMS) or a multimedia message service (MMS). S110.

Meanwhile, the education management system for implementing the education management method according to the present embodiment may perform education management procedures for enabling credits based on careers Sill to S120, namely, for admitting a student's careers as credits, before, after or at the same time as performing the aforesaid education management procedures for enabling credits based on talents S101 to S110.

Referring to FIG. 6B, in the education management method according to the present embodiment, first, the education management system 120, which is mounted to or linked with the school server 100 such as a university or a graduate school, receives the student's career data from the user terminal Sill.

Next, the education management system 120 assesses the career matters in the career data on the basis of the predetermined standards S115.

Meanwhile, in the education management system 120, confirming career matters and performing a notification on the career matters which are carried out before and after performing career assessment are substantially identical to the procedures described in the sections relating to FIG. 2, namely, S112 to S114, and S116 to S120), and thus the detailed description thereon will be omitted.

According to the present embodiment, the education management system 120 may provide predetermined credits for talent donation hours registered in the associated authority upon providing credits or may provide as the predetermined credits for business hours included in career matters being beyond a predetermined standard relating to a major-related business and performed in a company or completion hours of education being beyond a predetermined standard and performed in a pre-designated educational institution.

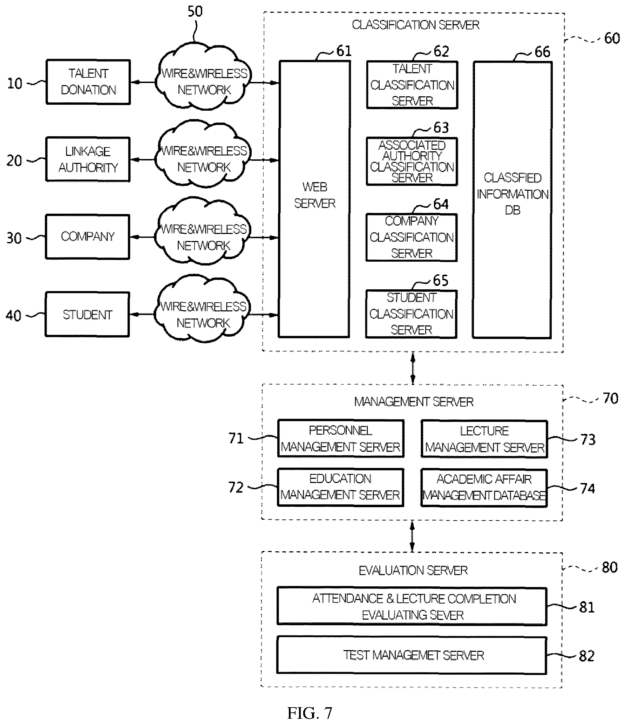

FIG. 7 is a block diagram showing an integrated education management system to which the education management system of FIG. 5 is applied.

Referring to FIG. 7, the integrated education management system according to the present embodiment may include: a classification server 60 provided so that the student 40 for performing the registration of talent donation 10 and the associated authority 20, and the registration of the company 30, and for being granted a degree can connect to the web server 61 through the wire and wireless network 50; a management server 70 linked with the classification server 60 so as to manage various of an online university; and an evaluation server 80 linked with the management server 70 and being in charge of the completion of classes and evaluation thereto.

The classification server 60 includes: the web server 61 provided so that a connector and the like can connect to an on-line university through the wire and wireless network; the talent classification server 61; the associated authority classification server 62, the company classification server 63; the school classification server 64; and the classified information DB 66 provided to record and store classified information of the talent classification server 61, the associated authority classification server 62, the company classification server 63 and the school classification server 64.

When individuals (registered students, non-registered students and the like) having various kinds of professional knowledge donate their talents to an online university or connect to request their talents as credits, the talent classification server 62 is provided to evaluate and classify the talents and to select appropriate lecture types.

The associated authority classification server 63 is linked with the online university and is provided to select or evaluate the classification of an associated authority and the type of lectures, or transmit and receive linked data in the case of being connected by the authority in order to provide various kinds of professional knowledge or knowhow possessed by the authority through classes of the online university, or being linked for the authentication of talent matters or career matters.

The company classification server 64 is provided to perform evaluation and classification when a company among various companies seeks a link between schools and industry so that a degree can be granted by linking various kinds of vocational education or research activity carried out in the company with the online university.

The student classification server 65 is provided to evaluate classification resulting from existence or non-existence of a connected student' career when the student has acquired a degree by taking the online university's classes and the like.

The above respective classification servers may be provided so that connectors can be individually evaluated and classified according to a program based on a standard for evaluation provided in each of the servers and the standard for evaluation, and may have a pop-up message so that a connector can receive information on personal matters or career matters as needed, or may have a means (a user interface and the like) which can display other input matters on a monitor and the like.

The management server 70 includes: a human resource management server 71 for managing a professor database, a school database, an educational personnel database and the like; an education management server 72 including a credit approval database, a paper database, and a career assessment database and the like; a lecture management server 73 including a course recording database, a video lecture database and the like; and an academic affair management database 74 including an online university situation database, a major completion-related database, a department information database and the like.

The management server 70 records, stores and manages data on lectures of an online university and general educational administration in a database, and at the same time, provides the information to an connector connected through the web server 61 by being linked with the classification server 60 and the evaluation server 80.

The evaluation server 80 includes an attendance and lecture completion evaluating server 81 configured to evaluate whether or not a participant of an online university has taken a video lecture, and a test management server 82 configured to manage results of various tests for measuring results according to taking of the lecture.

The evaluation server 80 is linked with the classification server 60 and the management server 70 and manages evaluation materials of a student connected through a web server 61.

In this embodiment, the classification server 60 may include a first receiving unit and a second receiving unit of FIG. 5 through a web server 61, etc. The management server 70 may include the first linkage unit, the second linkage unit and the credit awarding unit. The evaluation server 80 may include the talent assessment unit and the career assessment unit.

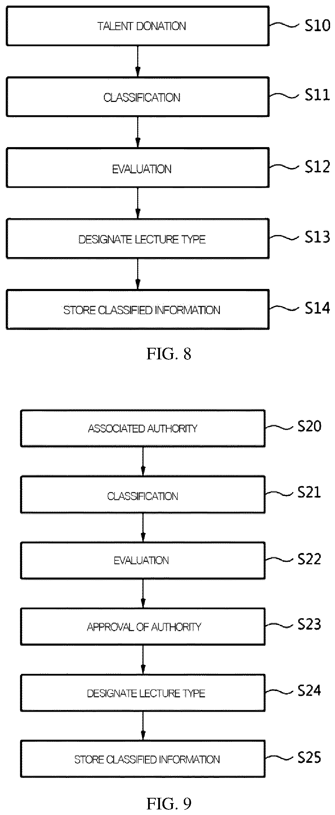

FIG. 8 is a flow chart showing an operation procedure of a talent classification server of FIG. 7.

Referring to FIG. 8, when a connector connects to the talent classification server for talent donation, the talent classification server 62 classifies the talent and then classifies the types of lectures accordingly, thereby recording and storing information thereon in the classified information database 66. For this, the talent classification server 62 may be configured to carry out a series of procedures such as donating talents S10, classifying talents S11, evaluating the talents S12, designating lecture types S13, and storing classified information S14.

Here, the classifying of the talents S11 is a step of classifying information as to if the talents to be donated pertains to any department of the online university, and the evaluating of the talents S12 is a step of evaluating as to whether or not the donated talents is appropriate for education courses proceeded with departments provided at an online university, and a step of evaluating as to whether or not the donated talents correspond to the education courses necessary for the departments although they have a relation with the department. Also, the designating of the lecture type S13 is a step of determining if the talents are provided to attendees having any level after the talents have been admitted to be appropriate for the departments. For example, this is intended to determine a course for liberal arts or a mandatory course for major subjects and the like. Furthermore, the storing of the classified information S 14 is a step of storing information on the classification and evaluation of the donated talents determined according to each step, and the designation of the lecture type in the classified information database 66.

FIG. 9 is a flow chart showing an operation procedure of a sorting server of a relevant authority of FIG. 7.

Referring to FIG. 9, when an expert group, such as an association connects in order to provide an online university with knowledge or knowhow belonging to their group, the associated authority classification server 63 classes information on the expert group, and then classifies the type of lectures accordingly, thereby recording and storing information thereon in the classified information database 66. For this, the associated authority classification server 63 performs a series of procedures such as connecting to the associated authority S20, classifying S21, evaluating S22, approval of an authority S23, designating a lecture type S24, and storing the classified information S25.

Here, the classifying S21 is a step of classifying information as to if the expert group belongs to any department of the online university when the expert group, such as an association connects in order to provide the online university with knowledge or knowhow belonging to the group.

The evaluating S22 is a step of evaluating as to whether or not the knowledge or knowhow belonging to the expert group, such as an association is appropriate for an educational course which is performed by a department provided with the online university, and of evaluating as to whether or not the knowledge or knowhow corresponds to an educational course which is required in the department.

The approval of the authority S23 is a step of approving so that the authority can teach at the online university only when ideology pursued by the associated authority having department suitability such as an association is appropriate for that pursued by the online university, and of preventing online education from being abused in a moneymaking purpose or in promotion and the like of the associated authority which is not suitable for the online university by providing of the knowledge through the associated authority unlike the talent donation of individuals.

The designating of the lecture type S24 is a step of determining as to if the knowledge or knowhow belonging to the expert group, such as the association is taken by attendees of any level after the department suitability has been admitted, for example, determining as to if the knowledge or knowhow is provided as a course for liberal arts or a mandatory course for major subjects.

The storing of the classified information S25 is a step of storing the information regarding the classification and evaluation of the associated authority which is a professional group such as an association determined according to each step above, and the designation of the lecture type in the classified information database 66.

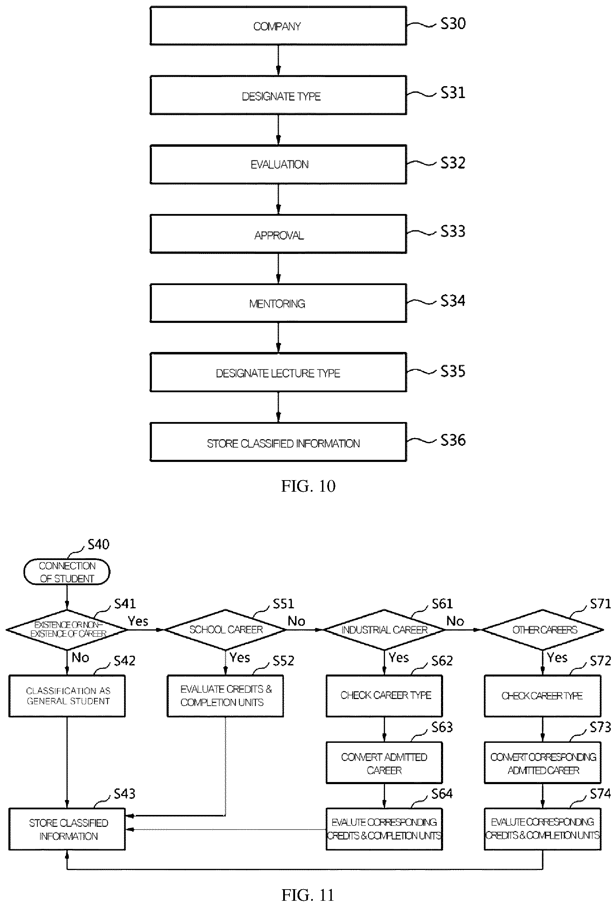

FIG. 10 is a flow chart showing an operation procedure of a company classification server of FIG. 7.

Referring to FIG. 10, when an online university connects in order to require the acquiring of a degree by being linking with job education or research activity carried out in a company, the company classification server 64 classifies information on the company and then classifies a lecture type accordingly, thereby recording and storing the information in the classified information database 66. For this, the company classification server 64 may be implemented to perform a series of procedures such as the company connecting to the server S30, designating a lecture type S31, performing evaluation S32, giving approval S33, performing mentoring S34, designating the lecture type S35 and storing the classified information S36.

Here, the designating of the lecture type S31 is a step of judging as to whether the company which connects for requiring the obtaining of a degree by being linked with job education or research activity of the company has an intention to grant a degree through liaison between the online university and industry or an intention to take a simple course for employees, and when the connection is intended to take the simple course for the employees, the lecture type is designated so that the employees can take the course as each student through individual connection. When research activity or job education of the company is performed by being linking with an online university, the company classification server 64 according to the present embodiment may be a server for processing it.

The performing of the evaluation S32 is a step of evaluating as to whether the job education or the research activity of the company is appropriate for a course of study carried out in each of the departments provided with the online university and a step of evaluating as to whether the job education or research activity corresponds to the course of study necessary for the department although it has a relation with the departments.

The giving of the approval S33 is a step of approving on-the-job education or a research activity of a company having suitability for a department to be taught through an online university when the on-the-job education or research activity is appropriate for pursuit of the online university, and to prevent online education from being misused in a moneymaking object or promotion which is not appropriate for the online university.

The performing of the mentoring S34 is a step in which, with respect to the company's job education or research activity, the company's senior members or superiors according to an organization structure of the company perform a role as professors, and subordinates or persons who carry out research according to instruction become attendees, thereby enabling education to be taken, and accordingly, when the company's senior members or superiors perform the role as the professors, in the similar way to that of the step of the talent donation (see S10 of FIG. 8), they give lectures based on official knowledge or knowledge resulting from the performance of researches, and the attendees take the lectures in the similar way to that of students acquire and obtain credits. For example, according to whether the lecture is taken or not, the performing of the mentoring S34 may include performing a student connection when there is a need to take a lecture and performing a connection for talent donation when there is no need to take a lecture, thereby enabling education according to the job education or research activity of the company to be performed through the online university. In such a case, it may be effective to implement a company own university within the online university through shared duties according to structures in the company unlike general students or talent donators of the online university.

The designating of the lecture type S35 is a step of determining if education according to the job education or research activity of the company is provided to attendees having any level. For example, this is intended to determine a course for liberal arts or a mandatory course for major subjects and the like. Furthermore, the storing of the classified information S36 is a step of storing information on the classification, evaluation, and designation of the lecture type of the company determined according to each step, and the designation of the lecture type in the classified information database 66.

FIG. 11 is a flow chart showing an operation procedure of a student classifying server of FIG. 7.

Referring to FIG. 11, the student classification server 65 carries out a series of procedures such as being connected by a student S40, judging as to whether or not careers are true S41, judging school careers S51, judging careers of an industry S61, and judging other careers S71. Here, the judging of the school careers S51 may include evaluating credits and the units of completion S52 and storing classified information S43. The judging of the careers of the industry S61 may further include checking a career type S62, converting the admitted careers S63, evaluating corresponding credits and the units of completion S64, and storing the classified information S43. Furthermore, the judging of other careers S71 may further include checking a career type S72, converting the admitted corresponding careers S73, evaluating the corresponding credits and the units of completion S74 and storing the classified information S43.

More specifically, when the connection of the student S40 has been performed, the student classification server 65 classifies the connected student as a general student S42 in a case where the student has no careers accumulated in other places except for a relevant school so that the student can be guided so as to take a lecture and take necessary credits according to the school's academic calendar.

Also, when the connected student has school careers accumulated in a different school other than a relevant school according to the present embodiment S51, the student classification server 65 enables credits completed in the different school and the unit of completion thereof to be evaluated as credits and the unit of completion recognized through the school sever according to the present embodiment S52, and guides the student to attend a course accordingly. In such a case, evaluation results of credits and a completion unit of the credits may be stored in the classified information database 66 through the step of storing classified information S43.

The step of judging industrial careers S61 may be performed by apprehending information relating to the kind of careers or the type of occupation accumulated in a different place other than the relevant school in a step of apprehending of the type of careers S62. When the connected student has industrial careers, information on the kind of careers or the type of occupation accumulated in the different place is apprehended through the step of apprehending the type of careers S62, and the careers are given a weighting according to the predetermined standards stored in the school server according to the present embodiment. The weighting to the careers may be evaluated as a corresponding credit and the unit of completion corresponding thereto and may be stored in the classified information database 66 through the step of storing classified information S43. According to the present embodiment, when a student has an industrial career, the completion of credits corresponding to the career is admitted, and thus there is no need to complete unnecessary credits, and a degree can be more easily granted, thereby promoting the reduction of school expenses and time.

In the step of judging other careers S71, when there are careers performed in a private business or one-person business place and the like, in the step of converting corresponding admitted career S73 after the step of checking the career type S72 intended to check the kind of careers and the type of occupation, the careers are converted into and provide with weighted values for the corresponding careers relating to other careers according to the prefixed standards in the school server according to the present embodiment. The weighted values for the careers are evaluated as credits and the units of completion corresponding thereto in the step of evaluating corresponding credits and the units of completion S74 and are then stored in the classified information database 66 in the step of storing classified information S43. According to the present embodiment, with regard to the career of a cottage industry or other special careers other than the careers of industrial enterprises, a level of the completion of credits is judged according to prefixed standards, and accordingly, a degree can be taken without a need to doubly complete the credits of an unnecessary area.

Table 2 is an example of a conversion table which can be applied to the step of career recognition conversion according to the present embodiment.

**[Table 2]**

| | | | |
|---|---|---|---|
| Career recognition conversion | Industrial career | Certificate of career | A |
| | | Project performance career | B |
| | | Certificate | c |
| | | Award career | D |
| | | Other career evidential matters | E |
| | Other career | Business registration certificate | F |
| | | Career field | G |
| | | Certificate | H |
| | | Group joining material | I |
| | | Verification of achievements | J |

As shown in Table 2, in the step of converting the admitted careers S63 and the step of converting the admitted corresponding careers S74, with regard to the careers of an industry or other jobs, admitted career matters for respective items are prescribed, and weighted values for the respective items indicated as A to J are defined according to the respective prescribed items. Furthermore, the weighted values provided as defined may be provided as corresponding credits based on interrelationship with credits defined in the school server (the education management system) according to the present embodiment. According to the present embodiment, various careers accumulated through social activities may be admitted as proper credits and the like in n university or a graduate school so that the substantiality and virtual reality of education can be promoted.

In the aforesaid step of converting the admitted careers S63 and the step of converting the corresponding admitted careers S74, the matter that the student's career matters are admitted as credits for major subjects shows that the career matters are admitted as constant credits according to admitted career matters prescribed according to the respective items. Accordingly, as shown in Table 1, as the admitted career matters are prescribed according to the respective items, careers obtained through industrial enterprises or other jobs may be admitted as constant credits as prescribed. Except for the items indicated in Table 1, different items which can be admitted as careers may be added.

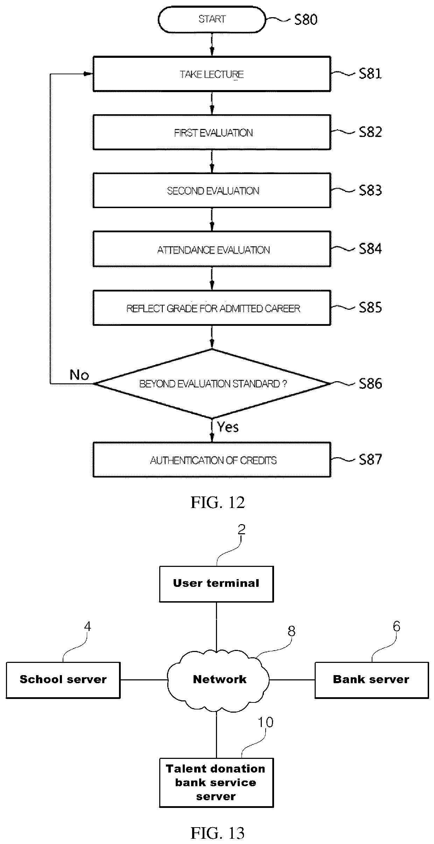

FIG. 12 is a flow chart showing an operation procedure of an evaluation server of FIG. 7.

Referring to FIG. 12, the evaluation server 80 evaluates an attendee who attends an online lecture through a web server 61 connected to the school server. To do so, the evaluation server 80 may be implemented so as to carry out a series of procedures of: attending the lecture S81, primarily evaluating the attendee S82, secondarily evaluating the attendee S83, evaluating attendance S84; reflecting grades for admitted careers S85; judging whether or not the grades is beyond evaluation standards S86; and authenticating credits S87.

In the step of attending the lecture S81, when respective participants take a lecture according to a guidance, and receive an evaluation, such as a first evaluation, a second evaluation and the like in the middle of the period of taking the lecture, the school server may reflect the participants' attendance matters or evaluation matters in their credits. In particular. unlike a general participant, in the case of a participant whose completion unit is determined according to the recognition of his or her career, the evaluation server 80 may reflect matters regarding the participant's completion unit S85, and may operate a total sum of grades resulting therefrom to be admitted as credits in a step of authenticating credits S87 when the total sum of the grades exceeds the predetermined evaluation standards.

Meanwhile, the aforesaid embodiments show the examples in which the present invention is applied to some jobs or businesses, but the present invention is not limited to the configurations, but can be applied to most of two million businesses. In such a case, according to the category of business, items which can be admitted as careers or talents are fixed and are then scored, and when a grade of talent matters or career matters intended to be admitted as credits is beyond a standard grade, some embodiments may be implemented so that credits corresponding thereto can be admitted. Here, a certificate, a grade being beyond a constant standard obtained through a certificate-related official test (a qualifying examination and the like), education completion hours performed in a designated organization, the period (month/year) of working in a relevant field, and the like may be applied to items which can be admitted as careers or talents.

According to some embodiments of the present invention, there may be generated the education management system and the education management method in an alternative university form that enable a student to skip education classes in a standard school and enable talents or careers to be admitted as credits, namely, credits for graduation of an university or a graduate school so that the student can receive a degree (for example, a talent-based degree, a career-based degree, and a talent and career-based degree).

In addition, the education management system of this embodiment may cancel some credits or degrees of a user's talent recognition degree, career recognition degree, or talent career recognition degree corresponding to the user terminal based on the talent donation-related information obtained from the affiliated institution. To this end, the academic management system or its evaluation server is provided with a credit cancellation unit and a degree cancellation unit, through which the user's talent recognition degree, career recognition degree, or talent career recognition degree corresponding to the user terminal can be canceled, or through which credits for at least a portion of credits for talent, career, or talent career recognized for obtaining the degree may be canceled, based on information related to talent donation obtained from the service system of the talent donation bank corresponding to the affiliated organization or the affiliated organization.

FIG. 13 shows a general configuration of a system for providing a talent donation bank service in accordance with an embodiment of the present invention.

Referring to FIG. 13, a talent donation bank service server 10 (hereinafter simply referred to as a "service server") according to the present embodiment is connected to a user terminal 2, a school server 4 and a bank server 6 over a network 8.

For reference, the term "talent donation bank" is an expression that represents a talent donation bank, a competence donation bank and a talent and competence donation bank in the system or method of the present embodiment which have been designed to efficiently utilize a donator and support the financial transactions of a donator by forming a talent, competence or talent and competence donator pool. Accordingly, the term "talent donation bank" may be substituted with a competence donation bank or a talent and competence donation bank according to circumstances.

The service server 10 may include memory in which a program for a talent donation bank service has been stored and a processor which provides the talent donation bank service by performing the program stored in the memory. Furthermore, the service server 10 may include communication means or a communication interface connected to the network 8.

The user terminal 2 may be means which is connected to the service server 10 over the network 8 and which can transmit and receive a signal and data or an element which performs a function corresponding to such means. For example, the user terminal 2 may be implemented using a desktop computer, a notebook computer, a tablet mobile terminal, a portable terminal or the like. The portable terminal may include a high-performance and multi-function mobile terminal so called a smart phone.

The school server 4 includes an educational system for granting a talent, career or talent and career qualification degree. The school server 4 may include an educational system for qualifying and granting a degree by only talent, a career or a talent and career.

Furthermore, the school server 4 may be implemented to provide the service server 10 with at least some of educational information of a student who has a talent, career or talent and career qualification degree in accordance with a specific contract. In this case, the service server 10 may operate to store at least some of the educational information of the student, received by the school server 4, in the storage unit as a customer's user information based on the contents of the contract or to access the school server 4 and obtain educational information for a required student, if necessary. If the school server 4 and the service server 10 are managed by the same owner or the same administrator or the like, a separate contract may be omitted.

The bank server 6 may include the server of an official financial institute which is capable of obtaining permission from a country or the representative of an administrative district or a person in charge and performing financial transaction business. The bank server 6 is connected to the network 8 and may be implemented to support convenient online financial business for a contracted customer. For example, in the present embodiment, the bank server 6 may be implemented to perform business, such as a simplified investment fund load, on a customer who performs online financial transactions through the user terminal 2 connected to the service server 10.

The network 8 may include a wired, wireless or wired/wireless communication network. That is, the network 8 may include all of types of communication infrastructure capable of mutual communication through the transmission/reception of signals and data, such as a short-distance wireless communication network, a public switched network, a data network, the Internet, a satellite network or a combination of them.

The service server according to this embodiment may be implemented to cancel a talent recognition degree, a career recognition degree, or a talent career recognition degree of a user corresponding to the user terminal based on the talent donation-related information provided at the request of the school server. The valuation may be implemented to obtain information on degree cancellation from the school server and reflect it in the evaluation result.

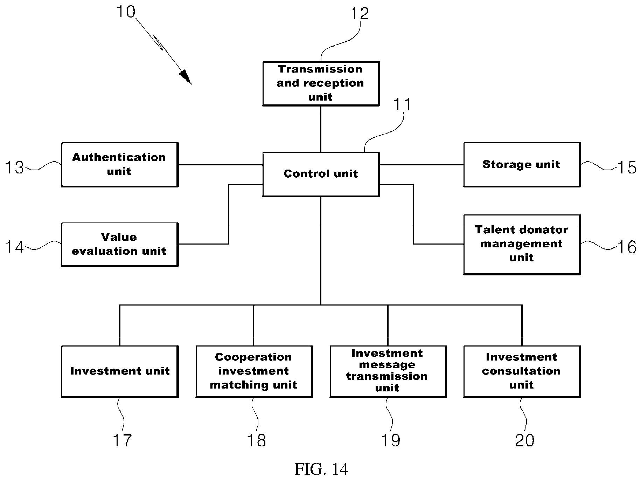

FIG. 14 shows a schematic configuration of the talent donation bank service server of the system of FIG. 13.

Referring to FIG. 14, the service server 10 according to the present embodiment may be configured to included a control unit 11, a transmission and reception unit 12, an authentication unit 13, a value evaluation unit 14, a storage unit 15, a talent donator management unit 16, an investment unit 17, a cooperation investment matching unit 18, an investment message transmission unit 19 and an investment consultation unit 20.

Each of the elements is described in more detail. The control unit 11 may correspond to the central processing unit of the service server 10. Furthermore, the control unit 11 may effectively provide the talent donation bank service to the user terminal in association with the school server and/or the bank server by controlling the elements of the service server 10 by performing the program stored in the memory, that is, part of the storage unit 15. The control unit 11 may be implemented to include a plurality of microprocessors for processing signals or data in a distributed manner or in parallel in addition to a single processor.

The transmission and reception unit 12 may be equipped with communication means or a communication interface device installed for communication with the user terminal, the school server and the bank server. The transmission and reception unit 12 may be implemented to comply with the communication standard of the user terminal, the school server and the bank server or the communication standard of a network for processing a communication signal and data between the user terminal, the school server and the bank server.

The authentication unit 13 may be basically used to authenticate the user terminal, the school server or the bank server which accesses the service server 10. Furthermore, the authentication unit 13 may be means for approving the talent qualification degree, competence qualification degree or talent and competence qualification degree of a specific customer through association with the school server. For such an approval task, the authentication unit 13 may be implemented to be associated with a separate higher authentication institute (an official authentication institute, etc.).

The value evaluation unit 14 may be implemented to evaluate the talent qualification degree, competence qualification degree or talent and competence approval degree of a customer as a property value based on a predetermined criterion. For example, the value evaluation unit 14 may be implemented to evaluate a predetermined one time or 1-day tuition fee based on a first criterion, to evaluate the daily mean value of lecture opening times for a predetermined related subject for a recent specific period as a second criterion or to calculate evaluation results by combining the first criterion and the second criterion in relation to a talent, competence or talent and competence qualification degree.

Furthermore, the predetermined criterion of the value evaluation unit 14 may be implemented to evaluate a gain or profit which may be obtained by an enterprise one time or for a specific period (1 day, etc.) using the talent, competence or talent and competence of a customer as a financial value. For example, the value evaluation unit 14 may be implemented to financially evaluate an effect which may be obtained when the talent, competence or talent and competence of a customer is utilized in association with the activities of an enterprise, such as public relations, an advertising and/or cooperation.

The aforementioned value evaluation method of the value evaluation unit 14 may be implemented using at least one of a variety of conventional PR evaluation methods which may be used to evaluate an effect of public relations of a model in the field of public relations in which an entertainer, a broadcaster, an athlete, etc. is utilized as a model or a combination of the variety of conventional PR evaluation methods. Furthermore, the value evaluation method may be implemented to compute evaluation results based on the results of the simulation of media evaluation for each news item, paper evaluation, photo evaluation, section evaluation, etc. in the aforementioned PR evaluation methods. A simulator for the value evaluation may use a simulation system which has been determined to be a tool suitable for the value evaluation of talent, competence or talent and competence through trials and errors.

The storage unit 15 is connected to the transmission and reception unit 12 and may be implemented to store a fund investment request. The storage unit 15 is connected to the authentication unit 13 and may be implemented to store an authentication result. The storage unit 15 is connected to the value evaluation unit 14 and may be implemented to store evaluation results. The storage unit 15 is connected to the investment unit 17 and may be implemented to store a bank statement history of investment funds for a customer.

Furthermore, the storage unit 15 may store a cooperation investor list, may provide a cooperation investor list or specific cooperation investor information in response to a request from the cooperation investment matching unit 18, and may store a bank statement history of investment funds or a transmission/reception history of an investment fund guidance message through the cooperation investment matching unit 18.

Furthermore, the storage unit 15 may store information, such as information about the calculation criterion of an investment fund amount, information about the repayment of investment funds, a talent donation condition for the repayment of investment funds and so on, which may be used in the investment message transmission unit 19.

Furthermore, the storage unit 15 may store an investment consultation message which may be used for the investment consultation unit 20 to provide the investment consultation message to the bank server. In this case, the investment consultation message may include an investment fund amount which may be requested by a customer based on the evaluation results of the value evaluation unit 14. Furthermore, the investment consultation message may include a calculation criterion for an investment fund amount or a talent donation condition for the repayment of investment funds. In this case, the term "talent donation condition" is an expression that represents a competence donation condition or a talent and competence donation condition.

The talent donator management unit 16 manages a talent donator in association with the school server. In this case, the talent donator may refer to a talent, competence or talent and competence donator. The talent donator management unit 16 is connected to the school server which grants a degree by approving a talent, competence or talent and competence as credits in real time or periodically, and may be implemented to receive at least some data of educational information stored in the school server and to store the received at least some data in the storage unit 15. In accordance with the talent donator management unit 16, there are advantages in that excellent human resources can be effectively utilized and financial support for a customer (talent donator) can be effectively performed because a talent donator pool including a plurality of talent donators is formed.

The investment unit 17 may be implemented to transmit investment funds to a customer based on the evaluation results of the value evaluation unit 14. In this case, the investment unit 17 may be implemented to transmit the investment funds to the customer or a bank account written in the fund investment request of the customer received through the user terminal or to transmit only at least some of the investment funds to the bank account of the customer based on contents (a partial investment permission option check, etc.) written in the fund investment request of the customer.

The cooperation investment matching unit 18 may be implemented to extract a cooperation investor whose conformity degree for at least one item of evaluation results is a specific reference value or more from a cooperation investor list previously stored based on the evaluation results of the value evaluation unit 14 and to match a cooperation investor who has the highest index of conformity with a customer. That is, the cooperation investment matching unit 18 may be implemented to extract a cooperation investor who has the highest conformity degree based on the mark of a conformity degree, such as the code conformity mark of a talent donation field, the previous number of investments of a cooperation investor, and a feedback evaluation mark for talent donation, between the cooperation investor and a customer from a cooperation investor list extracted from information about a plurality of cooperation investors or partners stored in the storage unit 15. The code conformity degree of the talent donation field is described as an example. Code for the talent donation field may be implemented as in Table 3 below. In this case, the code conformity degree may be assigned in order of 10 marks, 5 marks and 1 mark depending on the position of the decimal point of code.

**[Table 3]**

| CODE (LARGE CLASSIFICATION FIELD) | 10 MARKS | 5 MARKS | 1 MARKS |
|---|---|---|---|
| A 1 b (fashion/style) | A * * | * 1 * | * * b |
| B 2 a (design/construction) | B * * | * 2 * | * * a |
| C 1 b (music/entertainment) | C * * | * 1 * | * * b |
| D 1 a (vehicle) | D * * | * 1 * | * * a |

In Table 3, the talent, competence or talent and competence of some fields, such as a fashion, a design, music and a vehicle, has been illustrated being evaluated, but the present invention is not limited to such elements. The present invention may be implemented to classify all of the past and current occupation groups and all of occupation groups to be developed in the future or all of school subjects within an educational curriculum into talent fields or career fields or detailed field thereof and applied them. Furthermore, the classification code of a talent donator whose conformity degree is compared with the code of a cooperation investor listed in Table 1 may be implemented to further add one or two positions of the decimal point in addition to the code of the cooperation investor. For example, the classification code of a talent donator, such as A1b17 or B2a23, may be assigned. In this case, the code of the first position may correspond to large classification, the code of the second position may correspond to middle classification, the code of the third position may correspond to small classification, and the code of the fourth and the fifth positions may correspond to a school subject and/or a serial number for occupation details classification. The investment message transmission unit 19 may be implemented to transmit an investment guidance message, including an investment fund amount according to the evaluation results of the value evaluation unit 14, to the user terminal of a customer. The investment message transmission unit 19 may write an investment guidance message by inserting the investment fund amount of evaluation results into a basic message stored in the storage unit. Furthermore, the investment message transmission unit 19 may be implemented to write an investment guidance message including a calculation criterion for an investment fund amount and/or a talent donation condition for the repayment of investment funds. The investment message transmission unit 19 may be implemented to provide an investment guidance message to the user terminal in association with a message service providing apparatus for providing a text message service or a multimedia message service over a network.

The investment consultation unit 19a may be implemented to transmit an investment consultation message, including an investment fund amount that may be requested by a customer based on the evaluation results of the value evaluation unit 14, to the bank server. That is, the investment consultation unit 19a may be implemented to transfer a customer's user information and value evaluation results to the bank server based on the evaluation results of value evaluation on the basis of information written in the fund investment request of the customer. The investment consultation unit 19a may be responsible for playing the role of a mediator so that a series of simplified online financial business affairs can be performed between the bank server and the service server or the bank server and the user terminal of a customer recommended by the service server in accordance with a financial transaction contract.

Like the investment guidance message, the investment consultation message transferred from the investment consultation unit 19a to the bank server may include a calculation criterion for an investment fund amount and/or a talent donation condition for the repayment of investment funds.

Meanwhile, the service server 10 of the present embodiment is not limited to the aforementioned configuration, including all of the investment unit 17, the cooperation investment matching unit 18, the investment message transmission unit 19 and the investment consultation unit 20. The service server 10 may be implemented to include any one of some elements of the service server 10, for example, the investment unit 17, the cooperation investment matching unit 18, the investment message transmission unit 19 and the investment consultation unit 20 or a group of some of them that may be combined.

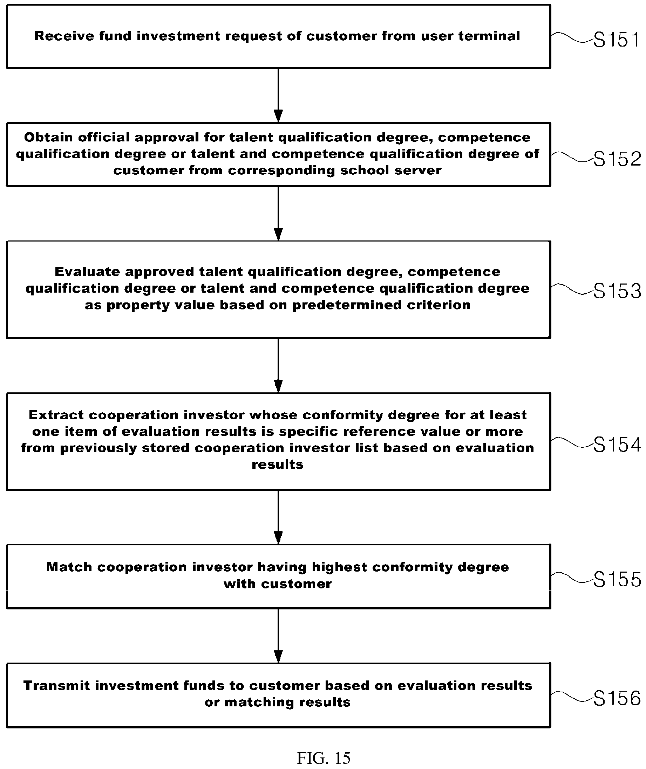

FIG. 15 is a flowchart of a method for providing a talent donation bank service in accordance with an embodiment of the present invention.

Referring to FIG. 15, the method for providing a talent donation bank service (hereinafter simply referred to as the "service method") according to the present embodiment may be started by first receiving, by the service server, the fund investment request of a customer from the user terminal (S151).

Next, the service server obtains official approval for the talent qualification degree, competence qualification degree or talent and competence qualification degree of the customer from a corresponding school server (S152).

Next, the service server evaluates the approved talent qualification degree, competence qualification degree or talent and competence qualification degree as a property value based on a predetermined criterion (S153).

Next, the service server extracts a cooperation investor whose conformity degree for at least one item of the evaluation results is a specific reference value or more from a previously stored cooperation investor list based on the evaluation results (S154).

Next, the service server matches a cooperation investor who has the highest conformity degree with the customer (S 155). In this case, the customer is a currently approved talent donator and refers to a customer who has been subjected to value evaluation with respect to talent possessed the customer. Furthermore, the cooperation investor refers to an enterprise which has been previously registered with the service server as a partner or an employer for a talent donator, and may be implemented to operate in conjunction with a corresponding enterprise server in real time depending on an implementation.

Next, the service server transmits the investment funds to the customer based on the evaluation results or matching results (S 156). The evaluation results or matching results may include a process of electronically checking, by the cooperation investor, the evaluation results or matching results based on an authorized base in an agreement that the cooperation investor pays some of or the entire investment funds based on the fund investment request and of electronically checking, by the customer, the evaluation results or matching results based on an authorized base in the corresponding agreement. In this case, the investment funds may be transferred from the service server or the cooperation investor or an investor account previously set in the bank server to the bank account of the customer.

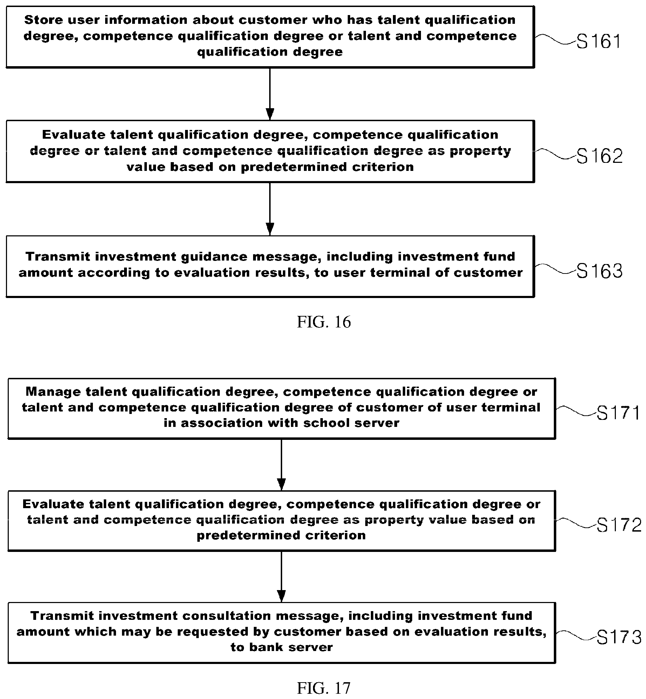

FIG. 16 is a flowchart of a method for providing a talent donation bank service in accordance with another embodiment of the present invention.

Referring to FIG. 16, the service method according to the present embodiment may be started by first receiving and storing, by the service server, user information about a customer who has a talent qualification degree, a competence qualification degree or a talent and competence qualification degree in association with the school server through the talent donator management unit (S161). In this case, the storage of the user information may include temporarily storing data, received in real time over a network, in volatile memory or storing received data in a storage medium (it may be part of the storage unit), such as the hard disk of the service server.

Next, the service server evaluates the talent qualification degree, the competence qualification degree or the talent and competence qualification degree as a property value based on a predetermined criterion (S162).

Next, the service server transmits an investment guidance message, including an investment fund amount according to the evaluation results, to the user terminal of the customer (S163).

In accordance with the present invention, an investment guidance message, including information about investment funds which may be invested in a customer who has a talent, career or talent and career qualification degree by performing value evaluation on user information about the customer with the consent of the customer in association with the school server or information about the repayment condition of the investment funds, is transmitted to the user terminal of the customer. Accordingly, a talent donation bank service can be provided, which is based on the utilization of human resources and a support scheme so that an opportunity for financial support for a customer can be expanded, simplified financial transactions based on a customer can be performed, and investment funds can be repaid through a talent donation, an enterprise public relations or advertising associated with talent donation, etc.

FIG. 17 is a flowchart of a method for providing a talent donation bank service in accordance with yet another embodiment of the present invention.

Referring to FIG. 17, the service method according to the present embodiment may be started by first managing, by the service server, user information about a customer who has a talent qualification degree, competence qualification degree or talent and competence qualification degree in association with the school server through the talent donator management unit (S 171). The management of the user information may include accessing or receiving and storing at least some of educational information about a student who has a talent, competence or talent and competence qualification degree stored in the school server, while operating in conjunction with the school server in real time in order to generate, maintain and manage a talent donator pool.

Next, the service server may be implemented to make a financial transaction contract with the bank server online and to store the contents of the corresponding financial transaction contract in the storage unit, although not shown in FIG. 17. The contents of the financial transaction contract may include a series of the procedures of financial transaction business affairs for a simplified online load based on the value evaluation results of the service server with respect to the customer who has a talent, competence or talent and competence qualification degree and a method for performing the series of procedures.

Next, the service server evaluates the talent qualification degree, competence qualification degree or talent and competence qualification degree as a property value based on a predetermined criterion (S172).

Next, the service server transmits an investment consultation message, including an investment fund amount which may be requested by the customer based on the evaluation results, to the bank server (S173).

In this case, the bank server may prepare a loan agreement for a specific customer in a specific window, for example, a talent donator simplification online load window so that the loan agreement can be viewed and confirmed. Furthermore, a customer can conveniently perform an investment fund load by accessing the bank server through the user terminal, viewing a loan agreement in a specific window of the bank server, and confirming the loan agreement on an authorized base. The loan agreement may include contents in which talent donation or enterprise or product public relations or advertising associated with the talent donation is performed in a specific number, a specific time, a specific period, a specific place or under the condition of a combination of them as the repayment condition of the investment funds of a corresponding talent donator.

In accordance with the present invention, the service server relays a talent donator and a bank so that easy load business for the talent donator is made possible online. Furthermore, a new online service through which loaned money can be effectively repaid through the talent donation of a talent donator can be provided.

Meanwhile, in the aforementioned embodiment, the service server has been implemented to operate as an independent server different from the bank server, but the present invention is not limited to such a configuration. The service server may be implemented to perform the function of the bank server together or may be implemented to operate in an integrated manner while operating in conjunction with the bank server. In this case, the service server may be implemented to perform the method of the aforementioned embodiment by simply transferring data, including an investment consultation message, to the functional unit of the bank server.

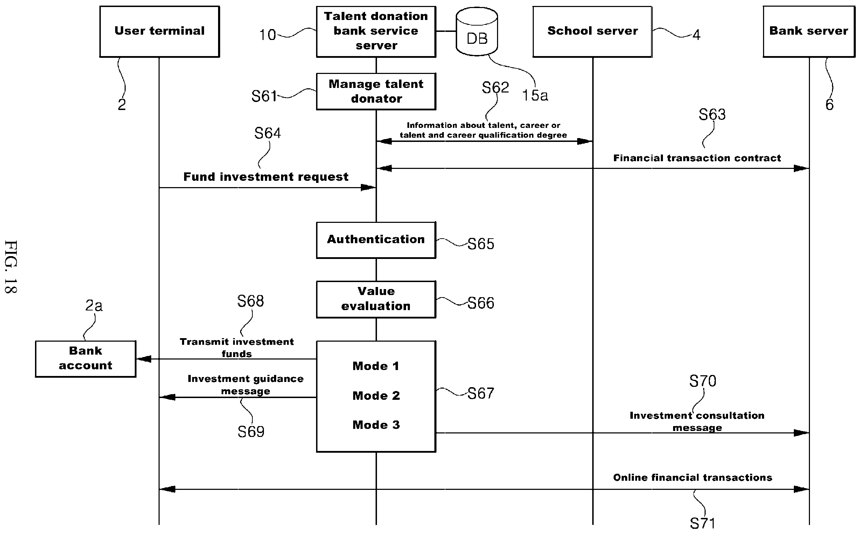

FIG. 18 is a flowchart of a method for providing a talent donation bank service in accordance with yet another embodiment of the present invention.

The service method according to the present embodiment may be implemented so that the service server 10 is connected to the user terminal 2, the school server 4 and the bank server 6 over a network and provides a series of talent donation bank services through cooperation and/or an interaction with them, as shown in FIG. 18.

Each of the steps is described in more detail. First, the service server 10 manages a talent donator through the talent donator management unit (S181). The management of the talent donator may include receiving, by the service server 10, information about a talent, career or talent and career qualification degree from the school server 12 through association with the service server 10 and the school server 4 and storing the information in a database 15a (S182).

Next, the service server 10 may perform a financial transaction contract for the talent donator in association with the bank server 6 (S 183). In this case, the contents of the contract may be stored in the database 15a for each bank server. In this case, the database 15a may be a specific element that functions as at least part of the storage unit of the service server 10.

Next, the service server 10 may receive a fund investment request from the user terminal 2 (S184). The fund investment request may be implemented in such a manner that a customer fills a form provided by the service server 10 with contents, attaches a required document, and uploads the form onto the service server 10. Furthermore, the fund investment request may include essential writing information, such as user information about the customer, information about the talent, career or talent and career qualification degree of the customer, and information about a school that has granted the degree.

Next, the service server 10 may perform authentication on the talent, career or talent and career qualification degree of the customer based on previously stored degree information (S185). In a modified embodiment, the service server 10 may be implemented to access the school server 4 in real time, query the customer about the authentication of the talent, career or talent and career qualification degree, and receive a response to the query of the authentication from the school server 4.

Next, the service server 10 performs value evaluation on the authenticated talent, career or talent and career qualification degree as a property value (S 186). The evaluation of the property value refers to calculating the activity, productivity and profit creation possibility of the customer who possesses the talent, career or talent and career qualification degree and tries to donate his or her talent in terms of money from a viewpoint of the customer himself or herself or association between the customer and a cooperation investor. The evaluation results of the property value for such talent, competence or talent and competence may be calculated by taking into consideration actually expected profits, such as the past and current tuition fee, lecture opening time, etc. and a tuition fee, a lecture opening time, etc. in the future and an environment for making profits.

As a simple example, the aforementioned value evaluation may be performed by evaluating the talent qualification degree, the competence qualification degree or the talent and competence qualification degree using predetermined one time or a predetermined 1-day/1-hour tuition fee as a first criterion, by evaluating the talent qualification degree, the competence qualification degree or the talent and competence qualification degree using the 1-day (or 1-month/20-days) mean value of a lecture opening time for a predetermined related subject during a recent specific period (e.g., 6 months or 1 year) as a second criterion, or by combining the first criterion and the second criterion. That is, if the 1-hour tuition fee is 500,000 Korean won, the lecture opening time of the related subject is an average of 700 hours/month nationwide in Korea, and students attending are an average of 70, the customer may perform talent donation of 5 million Korean won for 10 hours monthly. Accordingly, the evaluation results may be calculated as 5 million Korean won/month or 60 million Korean won/year. The service server may be implemented to add or subtract a specific amount in addition to the calculated evaluation results depending on other parameters or condition of the value evaluation.

Next, the service server 10 may relay the financial transactions of the customer according to a predetermined mode based on the evaluation results of the value evaluation for the talent, competence or a talent and career qualification degree of the customer (S 187). In this case, the relay mode may include the transmission of investment funds (a first mode), the transmission of an investment guidance message (a second mode) and the transmission of an investment consultation message (a third mode).

In the case of the first mode, the service server 10 may transmit investment funds according to the evaluation results to the bank account 2a of the customer which has been written in the fund investment request (S 188). In this case, an investor and the customer may additionally confirm and sign a specific investment fund agreement on an authorized base right before the transmission, but such a task is omitted in the present embodiment because the task would have been previously performed when the customer joined the talent donation bank service of the service server 10 and the specific investment fund agreement might have been stored to be valid for a specific period.

In the case of the second mode, the service server 10 transmits an investment guidance message, including an investment fund amount according to the evaluation results, to the user terminal 2 (S 189). The investment guidance message may include a calculation criterion for the investment fund amount, a talent donation condition for the repayment of the investment funds, bank server access information and so on. If such an investment guidance message is used, the customer as a talent donator can conveniently access the bank server 6 and process a simplified investment fund load task (S191), thereby being capable of maximizing customer load convenience.

Furthermore, in the case of the third mode, the service server 10 transmits an investment consultation message, including the customer information and investment fund amount according to the evaluation results, to the bank server 6 (S 190). The investment consultation message may include a calculation criterion for the investment fund amount, a talent donation condition for the repayment of the investment funds, information about the user terminal 2 of the customer 2 and so on. If such an investment consultation message is used, a bank as a cooperation investor or an investor can conveniently transmit a fund investment guidance message to the user terminal 2 and perform a simplified investment fund load task on a customer based on a response from the customer (S191), thereby being capable of obtaining advantages, such as expanding a load customer and/or supporting a talent donator.

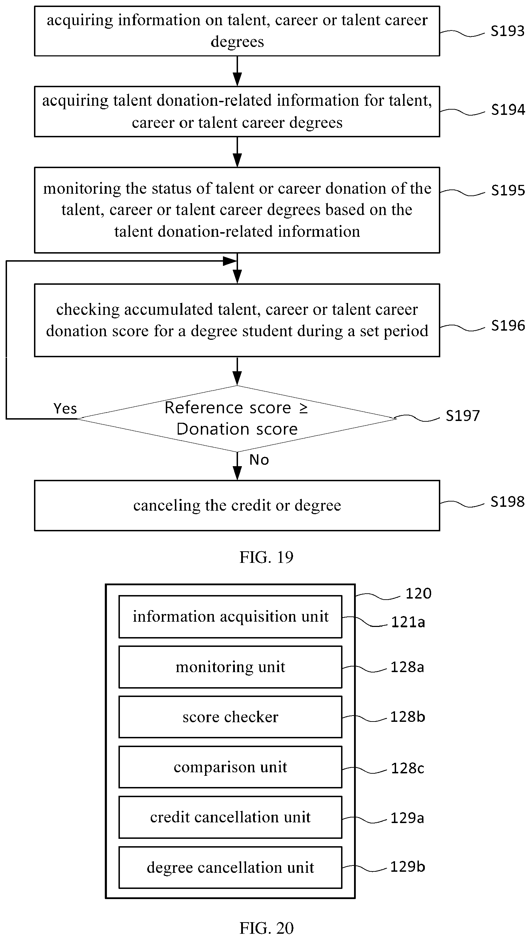

FIG. 19 is a flowchart of an education management method according to another embodiment of the present invention, and FIG. 20 is a block diagram of a main configuration of an education management system implementing the education management method of FIG. 19.

Referring to FIG. 19, the education management method according to this embodiment acquires talent, career, or talent career degree information S193, acquires talent donation-related information S194, and administrates specific credits or a degree of talent career degrees based on the steps S193 and S194.

In more detail, the education management system monitors the status of talent, career, or talent or career function of a person with a talent, career, or talent career degree based on the collected talent donation-related information S195. The talent donation-related information may be obtained from a separate talent donation management institution or a computing device or server of a talent donation service providing system.

Next, the education management system checks the pre-set donation conditions after conferring the degree for the credits of the talent, career or talent career degree or the talent, career or talent career subject required for this degree, and checks a talent donation score, a career donation score or a talent career donation score accumulated to the corresponding degree for a predetermined period (S 196).

As a result of the check, if the donation scores of the degree student is greater than or equal to the reference score within the preset donation condition, the education management system operates to maintain the corresponding credit or degree (Yes in S 197). On the other hand, as a result of the check, if the donation score of the degree student is less than the reference score within the preset donation condition, the education management system operates to cancel the corresponding credit or degree (No and S198 in S197).

The above-described education management method may be implemented by the education management system 120 shown in FIG. 20. As shown in FIG. 20, the education management system according to the present embodiment includes an information acquisition unit 121a, a monitoring unit 128a, a score checker 128b, a comparison unit 128c, a credit cancellation unit 129a, and a degree cancellation unit 129b may be provided.

Next, the information acquisition unit 121a acquires talent, career, or talent career degree information and acquires talent donation-related information.

The monitoring unit 128a monitors the status of talents, careers, or talents or career functions of a talent, career or talented career degree based on the collected talent donation-related information. The talent donation-related information may be obtained from a separate talent donation management institution or a computing device or server of a talent donation service providing system.

The score checker 128b checks the pre-set donation conditions after conferring the degree with respect to the talent, career, or talent career degree or credits of the talent, career or talent career subject required for this degree, and accumulates it to the corresponding degree in a predetermined period. Check the score for donated talent, career or talent experience. The donation score is compared with the reference score within the donation condition set in advance in the comparison unit 128c.

As a result of the comparison in the comparison unit 128c, if the donation score of the degree student is equal to or greater than the reference score within the preset donation condition, the credit cancellation unit 129a and the degree cancellation unit 129b of the academic management system are It works so that the degree is maintained. On the other hand, as a result of the comparison, if the donation score of the degree person is less than the reference score within the preset donation condition, the credit cancellation unit 129a or the degree cancellation unit 129b of the academic management system operates to cancel the specific credit or degree of the degree person.

The above-described information acquisition unit 121a, monitoring unit 128a, score check unit 128b, comparison unit 128c, credit cancellation unit 129a and degree cancellation unit 129b are at least one program or software module. It can be implemented and stored in a memory or storage unit and executed by a processor connected to the memory, whereby the previously acquired credits or degrees of a degree person who has not used talent, career, or talent career as a talent donation for a predetermined condition or period. It can be implemented to cancel.

On the other hand, in the academic management method implemented by the credit management system of the above-described embodiment, prior to the canceling step (S 198), it may further include transmitting a guide or notification for cancellation of the credit or degree.

In addition, in this embodiment, degree or credit based on talent, career, or talent career may include credits or degrees awarded to the degree person according to a recommendation signal or consent signal obtained from member terminals of three or more other talent, career, or talent career degree students.

The three or more other talents, careers, or talented career degrees may registered as experts such as national intangible cultural heritage holders, national intangible cultural heritage transferees, doctors, professors, and technical historians in the relevant talent, career or talent career field related to the credits or degrees. The experts may be members or people who have received a talent, career, or talent career degree.

In addition, the talent, career, or talent experience degree or credits for this is the talent, experience, or talent experience of a person who has worked for a certain period of time or longer in a designated institution, business, company, educational institution, or affiliated institution. This may include credits or degrees awarded to the applicant in accordance with the recognition of a certain period of work at a designated institution, etc.

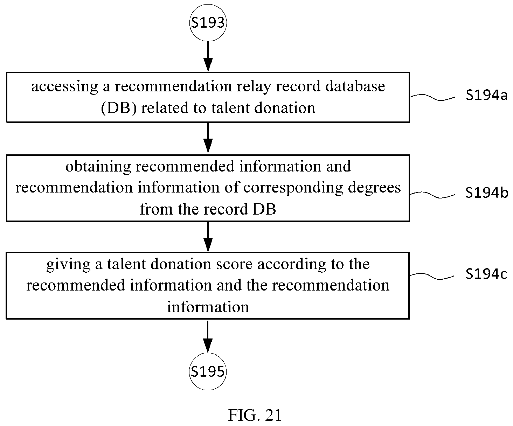

FIG. 21 is a flowchart of a main component of an academic management method according to another embodiment of the present invention.

Referring to FIG. 21, the academic management method according to the present embodiment sets a recommendation relay for recommendation and recommendation between talents, careers, or talented experienced degree students or between preset talents, experienced people, and talented experienced people. It can be recorded in a record system or database (DB) system and reflected in the maintenance or cancellation of a talent career degree.

For example, the degree of a talented degree can be confirmed by a pre-set academic management system at a certain period or at a certain time, and the degree can be maintained or canceled according to a pre-set procedure. That is, the academic management system acquires information on talent, career, or talented degree degree (S 193), accesses the recommendation relay record DB related to talent donation (S 194a), obtains the recommended information and recommendation information of the corresponding degree from the record DB (S 194b), and provides a talent donation score according to the recommended information and the recommended information may be assigned (S194c).

Recommendation information is information recorded on this system when the degree person recommends another degree person, preset talent, experience person, or talent experienced person in relation to talent donation, and such recommendation information is sent to the recommender in connection with the talent donation. It can function to give a preset score.

In addition, the recommended information is information recorded on the system when the degree is recommended by another degree person, preset talent, experienced person, or talented person with a talent donation in relation to talent donation. In relation to this, it can function so that a pre-set score is given to the recommended degree.

According to the present embodiment, the academic management method or the academic management system implementing the same may obtain a preset score through a recommendation relay, and maintain or cancel the degree of a talent, career, or talented career degree through this. In this case, the academic management system may further include a recommendation relay management unit connected to an information acquisition unit, a monitoring unit or a score check unit. The recommended relay management unit may be managed by a management server.

On the other hand, the recommendation relay of this embodiment is not limited to talent donation, and a preset score is assigned to the recommendation relay that is performed and recorded between talent, career or talent career degree graduates and/or a preset registered talent person and registered career person. It can be used to retain or cancel the degree of a talent, career or talented career degree based on scores.

Although the present invention has been described and shown in connection with the exemplary embodiments of the present invention for illustrating the technological spirit of the present invention, the present invention is not limited to only the shown and described configurations and operations. Those skilled in the art to which the present invention pertains will appreciate that the present invention may be properly changed and modified in various ways without departing from the category of the technological spirit of the present invention. Accordingly, all such proper changes and modifications and equivalents thereof should be construed as belonging to the claims of the present invention.

## Claims

1. An education management method for recognizing talents or careers of students or members as credits in an education management system that is connected to a user terminal, a linked institution, or a talent donation bank service server through a network, wherein the education management method comprises:
a step for acquiring information on talent, career or talent career degree and talent donation-related information for talent, career or talent career degrees;
a step for monitoring the status of talent or career donation of the talent, career or talent career degrees based on the talent donation-related information;
a step for checking accumulated talent, career or talent career donation score for a degree student during a set period according to the pre-set donation conditions for the degree or the credits, regarding the degree of the talent, career, or talent experience degree or the credits of the talent, career, or talent experience subject required for the degree, after conferring the degree; and
a step for canceling the credit or degree, when the donation score of the degree person is less than the reference score within the donation condition, as a result of the check.

2. The method of claim 1, further comprising a step for delivering a guide or notification for cancellation of the credit or degree before the step of canceling,
wherein the credits or degrees include credits or degrees awarded to the degree in accordance with a recommendation signal or consent signal obtained from member terminals of three or more talent, career, or talent career degree students, or
wherein the credits or degrees include the talents, careers or talents of a person who has worked for a predetermined period of time or longer in a designated institution, business, company, educational institution, or affiliated institution, or credits or degrees awarded to the applicant upon application for a degree.

3. An education management system which is connected to a user terminal via a network and which enables careers and talents to be admitted as the credits, the system comprising:
a first receiving unit configured to receive a student's talent-related data from the user terminal, the user terminal provided with a first user interface for inputting the talent-related data;
a second receiving unit configured to receive a student's career matter data from the user terminal, the user terminal provided with a second user interface for inputting the career matter data;
an associated authority linkage unit configured to inquire to an associated authority as to whether or not talent matters included in the talent-related data are true and to receive a reply as to whether or not the talent matters are true from the associated authority;
a certificate authority linkage unit configured to inquire to a relevant certificate authority as to whether or not the career matters included in the career data are true and to receive a reply as to whether or not the career matter are true from the relevant certificate authority;
a talent assessment unit configured to assess talent matters on the basis of predetermined first standards that includes the criteria for grating credits for talent donation time registered at the affiliated institution;
a career assessment unit configured to assess career matters in the career matter data on the basis of predetermined second standards that the criteria for granting credits for working hours greater than or equal to a certain standard for major-related work at a business included in the above-mentioned career matters or hours for completing education more than a certain standard at a predetermined educational institution;
a credit-awarding unit configured to give credits corresponding to grades resulting from talent assessment for a student's major to the talent matters when the talent matters are admitted or configured to give credits corresponding to grades resulting from career assessment for the student's major to the career matters when the career matters are admitted;
a web server configured to include the first receiving unit and the second receiving unit;
a classification server configured to include the web server, a talent classification server, a related organization classification server, a company classification server and a student classification server which are connected to the web server;
a management server configured to include the associated authority linkage unit, the certificate authority linkage unit and the credit-awarding unit; and
an evaluation server configured to include the career assessment unit, the credit-awarding unit, a credit cancellation unit and a degree cancellation unit,
wherein the credit cancellation unit and the degree cancellation unit cancel the credits or degrees for a talent recognition degree, a career recognition degree, or a talent career recognition degree of a user corresponding to the user terminal based on information related to talent donation obtained from the affiliated institution or the talent donation bank service system corresponding to the affiliated institution.

4. The system of claim 3, further comprising a recommended relay management unit managed by the management server, wherein the recommendation relay management unit accesses a recommendation relay record database (DB) related to talent donation, obtains recommended information and recommendation information of corresponding degrees from the record DB, and gives a talent donation score according to the recommended information and the recommendation information.
